# EUROPEAN PATENT APPLICATION

(11) **EP 3 912 962 A1**
(43) Date of publication of application: **24.11.2021**
(21) Application number: 20175299.5
(22) Date of filing: 18.05.2020
(51) Int. Cl.: C01B 39/02, B01D 53/86, B01D 53/94, B01J 29/76, C01B 39/30, C01B 39/48

(54) **COPPER-LOADED ZEOLITES WITH HIGH ACTIVITY FOR NH3-SCR**

(71) Applicant: UMICORE AG & Co. KG, 63457 Hanau-Wolfgang (DE)
(72) Inventor: Radhakrishnan, Sambhu, 3001 Heverlee (BE); Chandrasekharan Nair, Vinodchandran, 3001 Heverlee (BE); Breynaert, Eric, 1547 Bever (BE); Smet, Sam, 3010 Kessel-Lo (BE); Martens, Johan Adriaan, 3040 Huldenberg (BE); Schuetze, Frank-Walter, 63739 Aschaffenburg (DE)

(57) **Abstract**

The presented invention provides copper-loaded crystalline aluminosilicate zeolites having a maximum pore size of eight tetrahedral atoms, wherein the zeolites have an onset temperature at which motional narrowing is detected in the ¹H-NMR spectrum of between 10 and 373K. The zeolites can be used as the SCR catalytically active material in a catalysed substrate monolith. Furthermore, the zeolites are suitable as SCR catalytically active materials in a process for the removal of NOx from automotive combustion exhaust gas.

## Description

The present invention relates to copper-loaded crystalline aluminosilicate zeolites having a maximum pore size of eight tetrahedral atoms, wherein the zeolites have an onset temperature at which motional narrowing is detected in the ¹H-NMR spectrum of between 10 and 373 K. Said zeolites show an improved catalytic activity at low temperatures. The invention furthermore discloses a method for making said zeolites and a method for the selective catalytic reduction of nitrogen oxides by reaction with NH₃ as reductant (NH₃-SCR) wherein said copper-loaded crystalline aluminosilicate zeolites are used.

A major driver for the recent and future development of catalysts are the increasingly stringent world-wide legislative emission levels for road (e.g. passenger cars, trucks) and non-road (e.g. ships, trains) applications. In the specific case of removing nitrogen oxides from the exhaust gas of lean burn engines, there is a global need for more active, more selective and more stable catalysts, due to tightened legislative emission levels and increased durability needs. One effective method to remove nitrogen oxides (NOₓ) from the exhaust gas of these lean burn engines is selective catalytic reduction (SCR) with ammonia (NH₃). In NH₃-SCR, the NOₓ molecules are catalytically reduced to N₂ using NH₃ as reducing agent. Ammonia is usually fed as a less hazardous urea solution, which is decomposed to ammonia in the catalytic unit, and can be filled and stored in the vehicle in a dedicated reservoir.

Out of the different candidate catalyst materials, transition metal exchanged zeolites are found to be the best performing NH₃-SCR catalysts, especially in passenger cars and light duty vehicles. Zeolites are highly porous crystalline aluminosilicate materials with uniform pores and channels of molecular dimensions which occur in numerous framework structures. They are classified by the Structure Commission of the International Zeolite Association which defines respective framework types. The commission also assigns framework type codes consisting of three capital letters to all unique and confirmed framework topologies. For example, a widely used group of zeolites belongs to the faujasite framework to which the code FAU has been assigned. Zeolites can differ by framework type, as well as by chemical composition, atom distribution, crystal size and morphology.

It is common to classify zeolites according to their pore size which is defined by the ring size of the biggest pore aperture. Zeolites with a large pore size have a maximum ring size of 12 tetrahedral atoms, zeolites with a medium pore size have a maximum pore size of 10 and zeolites with a small pore size have a maximum pore size of 8 tetrahedral atoms. Well-known small-pore zeolites belong in particular to the AEI, CHA (chabazite), ERI (erionite), LEV (levyne) and KFI framework. Examples having a large pore size are zeolites of the faujasite (FAU) framework type.
Zeolites play an important role as catalysts in the so-called Selective Catalytic Reduction (SCR) of nitrogen oxides with ammonia to form nitrogen and water, and in particular if cations like copper and iron are included in the zeolite pores. They can perform over a broad temperature range in terms of conversion performance and selectivity. The SCR process has been widely used to remediate exhaust gases which result from the combustion of fossil fuels, in particular from stationary power plants and from vehicles powered by diesel engines. While zeolites occur in nature, zeolites intended for SCR or other industrial applications are usually manufactured via synthetic processes. Zeolites used for SCR or other industrial applications may comprise of one single zeolite framework type, an intergrowth, or a physical mixtures of more than one zeolite framework type and/or intergrowths.

Building on the classification proposed by Rao and Thomas, the different types of intergrowths relevant to zeolites are epitaxial and polytypical intergrowths, see CNR Rao and JM Thomas: "Intergrowth Structures: The Chemistry of Solid-Solid Interfaces", Acc Chem Res 1985, 13, 113-119. Epitaxy involves the oriented overgrowth of a zeolite crystal by a compositional or structurally different zeolite phase, whereas polytypism arises when individual sheets in a layered material are stacked in different sequences.
As intergrowth, polytypism is a more common phenomenon in zeolite crystallization. It can be pictured as a stacking of different structurally uniform domains in each individual crystal, without any mismatch of bonds. The two, or more, types of domains can be structurally related, for example when they represent a different periodicity. This most often occurs as an alternative stacking of a common sheet.
Specifically for the ABC-6 zeolite family of materials, polytypism as an intergrowth is well known. Materials belonging to the ABC-6 family are for example chabazite, offretite, erionite, gmelinite, sodalite and levynite. The structure of zeolite materials in the ABC-6 family can be represented as a stacking of layers containing planar six-rings (6Rs). The 6Rs in one layer can be connected to the next layers of 6Rs in different ways. The three different locations of the 6Rs in a layer can be given as A, B or C. The 6Rs in the different layers can be connected parallel to each other (position A) or by a shift (position B and C), resulting in different frameworks belonging to the ABC-6 family. For example, offretite can be represented by three connecting layers with a stacking sequence of AAB, whereas the erionite contains 6 unique layers with a sequence of AABAAC. A stacking fault between one of these layers, where the stacking sequence is slightly altered at some places, easily occurs and results in intergrowths of different framework types. An example where the AAB stacking sequence of OFF zeolite is randomly replaced by AABAAC, or vice versa, is called an ERI/OFF intergrowth with the ERI and OFF framework type the end members of the ingrowth series. Zeolite T and ZSM-34 are the most common examples. Examples of materials that can make intergrowths with chabazite are zeolites with the GME and AEI framework type. Within the ABC-6 family, other intergrowths are theoretically possible, such as an intergrowth of chabazite (AABBCC) and offretite (AAB).
There is an ongoing search for new zeolite materials with improved catalytic activity, next to improved selectivity and hydrothermal stability, in a wide range of applications. For example, to remediate exhaust gases resulting from the combustion of fossil fuels, in particular from stationary power plants and from vehicles powered by diesel engines, Selective Catalytic Reduction (SCR) is widely used. Zeolites loaded with copper and/or iron play an important role as SCR catalytically active materials and reduce harmful nitric oxides using ammonia to form nitrogen gas and water.

In C Paolucci, I Khurana, AA Parekh, S Li, AJ Shih, H Li, JR Di Orio, JD Albarracin-Caballero, A Yezerets, JT Miller, WN Delgass, FH Ribeiro, WF Schneider and R Gounder: "Dynamic multinuclear sites formed by mobilized copper ions in NOx selective catalytic reduction", Science 2017, 357, 898-903, steady-state and kinetic measurements, y-ray absorption spectroscopy and first-principles calculations are combined in order to demonstrate that under reaction conditions, mobilized Cu ions can travel through zeolite windows and form transient ion pairs that can participate in an oxygen (O₂) mediated Cu^{I}-Cu^{II} redox step integral to SCR, thus hinting at the importance of Cu mobility to activity. The observed reaction rates are linked with experimentally observed Cu species and with DFT (density functional theory) calculations. It does not present any direct experimental observation of Cu mobility.

J Novotný, M Sojka, S Komorovsky, M Neč̌̌as and R Marek: "Interpreting the paramagnetic NMR spectra of potential Ru(III) metallodrugs", J Am Chem Soc 2016, 138, 8432-8445 describes the influence of temperature on the chemical shift of ¹H and ¹³C NMR signals and the contribution of paramagnetic properties (due to the paramagnetic Ru(III) complexes) to this shift. The work is focused on the chemical shift and also mentions the effect on temperature induced sharpening of the NMR signals.

E Borfecchia, KA Lomachenko, F Giordanino, H Falsig, P Beato, AV Soldatov, S Bordiga and C Lamberti, "Revisiting the nature of Cu sites in the activated Cu-SSZ-13 catalyst for SCR reaction", Chem Sci 2015, 6, 548-563 discloses the nature and location of the most abundant Cu sites under close to reaction conditions in Cu-SSZ-13 catalysts (= CHA framework type) for SCR. This work is describing the static picture of where the Cu is located in active catalysts and how the amount of specific species as well as the rate at which they can be transformed in each other is linked to activity. It is silent about mobility of these Cu species and the link of it to activity.

F Göltl, P Sautet and I Hermans, "The impact of finite temperature on the coordination of Cu cations in the zeolite SSZ-13", Catal Today 2016, 267, 41-46 discuss the influence of temperature (low temperature) on the coordination of Cu cations in a CHA zeolite framework. The DFT (density-functional theory) calculations performed in this work demonstrate that thermal motion (mobility) of Cu cations cannot be neglected even at room temperature. A greater influence was found for Cu⁺ compared to Cu²⁺ ions. The work does not make a link between mobility of said ions and catalytic activity. The work refers to previous observations that vibrational spectroscopy experiments on adsorbed tracer molecules (CO or NO) showed multiple signals which could not be fully explained prior to this work.

P Chen, A Khetan, M Jab 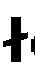 ońska, J Simböck, M Muhler, R Palkovits, H Pitsch and U Simon: "): Local dynamics of copper active sites in zeolite catalysts for selective catalytic reduction of NOₓ with NH₃", Appl Catal B 2018, 237, 263-272 discuss the mobility of Cu ions when solvated with NH₃ molecules. This mobility was not experimentally monitored directly but was derived by a combination of in situ impedance and infrared spectroscopy and DFT calculations. More precisely the mobility was linked to a shift in resonance frequency of the relaxation process associated with Cu ion movement within the zeolite framework. Using this method a difference was observed between the mobility of Cu in a Cu-SAPO-34 and Cu-ZSM-5 catalyst (from which it is known that the Cu-SAPO-34 has a higher activity in SCR catalysis) making it thermodynamically more favourable for the Cu-SAPO-34 to re-oxidize Cu¹⁺ to Cu²⁺, which is currently accepted as the rate determining step of SCR catalysis. The work doesn't mention anything about Cu mobility prior to exposure to NH₃ or any other SCR-related gas molecule. Furthermore, this publication is silent about the question of whether behaviour is directly linked to activity (the more mobile the Cu, the more active is the catalyst) nor if it is something shared over all zeolites or a group of zeolites.

P Chen, V Rizzotto, A Khetan, KXie, R Moos, H Pitsch, A Ye and U Simon: "Mechanistic understanding of Cu-CHA catalyst as sensor for direct NH3-SCR monitoring - the role of Cu mobility" Appl Mater Interfaces 2019, 11, 8097-8105 discuss the mobility of Cu ions when solvated with NH₃ molecules. The work was performed by combining complex impedance-based in situ modulus spectroscopy and DFT calculations. The mobility of Cu ions was linked to the NH₃ sensing performance of the catalyst, but not to the catalytic activity in SCR. The article is silent about the question of whether this behaviour is directly linked to activity (the more mobile the Cu, the more active is the catalyst) nor if it is something shared over all zeolites or a group of zeolites.

In AJ O'Malley, M Sarwar, J Armstrong, CRA Catlow, IP Silverwood, I Hichcock and A York: "Comparing ammonia diffusion in NH3-SCR zeolite catalysts: a quasielastic neutron scattering and molecular dynamics simulation study", Phys Chem Chem Phys 2018, 20,11976-11986 and in AJ O'Malley, I Hitchcock, M Sarwar, IP Silverwood, S Hindocha, CRA Catlow, A York and P Collier: "Ammonia mobility in chabazite - insight into the diffusion component of the NH3-SCR process" Phys Chem Chem Phys 2016, 18, 17159-17168, the importance of NH₃ mobility within a zeolite framework for SCR catalytic activity is discussed. However, only differences between framework types are mentioned linking the difference in NH₃ mobility mostly to the difference in amounts/density of 8-ring sized pores within the frameworks. No link is made between differences in activity between samples with a similar framework. The mobility of the NH₃ was measured using a combination of neutron scattering and molecular dynamics calculations. No link was made between activity and any behaviour of Cu.

In N Akter, Y Chen, J Parise, JA Boscoboinik and T Kim: "Effects of copper loading on NH3-SCR and NO oxidation over Cu impregnated CHA zeolite", Korean J Chem Eng 2018, 35, 89-98, the importance of the mobility of specifically isolated Cu²⁺ species and the amount of such species for the activity of the SCR catalyst is described. However, differences in Cu-mobility (and SCR activity) between different catalysts are not compared with one another. By contrast, the disclosure is limited to one sample with different Cu loadings and different ratios of Cu species present in the samples.

In V Rizzotto, P Chen and U Simon: "Mobility of NH3-solvated Cu" ions in Cu-SSZ-13 and Cu-ZSM-5 NH3-SCR catalysts: A comparative impedance spectroscopy study", Catalysts 2018, 8, 162-174, in situ impedance spectroscopy was used to study the mobility of Cu ions solvated with NH3 molecules. A higher mobility of such species was discovered for CHA framework compared to ZSM-5 framework which is attributed to a favourable cage organization within the CHA frame. It has to be noted that CHA generally presents a higher SCR activity compared to ZSM-5. The article is silent about Cu mobility prior to exposure to NH₃ or any other SCR-related gas molecule. No direct correlation between activity and Cu mobility was presented in this article.

### Problem to be solved by the invention

There is a constant need of new zeolites with good catalytic activity in NOₓ conversion at low temperatures, in particular with regard of their use in SCR applications. It is therefore an object of the present invention to provide zeolites which show improved catalytic activity at low temperatures and a process for the removal of NOₓ from automotive combustion exhaust gases wherein these zeolites are used as the catalyst.

### Solution of the problem

The inventors of the present invention have now surprisingly found copper-loaded crystalline aluminosilicate zeolites having a maximum pore size of eight tetrahedral atoms, wherein the zeolites have an onset temperature at which motional narrowing is detected in the ¹H-NMR spectrum of between 10 and 373K show an improved catalytic activity at low temperatures

The novel copper-loaded crystalline aluminosilicate zeolites according to the present invention, the process for making said zeolites and the process for the removal of NOₓ from automotive combustion exhaust gases wherein these zeolites are used as the catalyst are explained below, with the invention encompassing all the embodiments indicated below, both individually and in combination with one another.
As used in the present invention, the term "phase-pure zeolite" refers to a zeolite that is composed of crystals having only one crystal structure, i.e. the crystals contain no other crystal structure.

A crystal structure is a description of the ordered arrangement of atoms, ions, or molecules in a crystalline material. Ordered structures occur from the intrinsic nature of the constituent particles to form symmetric patterns that repeat along the principal directions of three-dimensional space in matter. A "crystal" therefore represents a solid material whose constituents are arranged in a crystal structure.
A "crystalline substance" is composed of crystals.
A "zeolite framework type", also referred to as "framework type", represents the corner-sharing network of tetrahedrally coordinated atoms.
A "CHA framework type material" is a zeolitic material having a CHA framework type. The same applies, mutatis mutandis, for an "ERI framework type material", an "AEI framework type material", and other zeolite framework type materials. Often, zeolite framework type materials are referred to as "zeotypes" or "isotypic framework structures". A common definition for a zeotype or an isotypic framework structure, respectively, is that it deals with any of a family of artificial materials based on the structure of zeolites. Thus, the terms "zeotype", "isotypic framework structure" and "zeolitic framework type material" are used synonymously. Well-known zeotypes are, for instance, SSZ-39, which is an AEI zeotype, and SSZ-13, which is a CHA zeotype.
An "intergrowth" of a zeolite comprises at least two different zeolite framework types or two different zeolite compositions of the same framework type.

In an "overgrowth" zeolite, one framework structure grows on top of the other one. Thus, "overgrowth" represents a species of "intergrowth", and "intergrowth" is the genus.

A "mixture" is a material made up of two or more different substances which are mixed but are not combined chemically. In the present invention, the two or more different substances which for a mixture are zeolites.

"Motional narrowing" as used in the present invention is a phenomenon where a certain resonant frequency has a smaller linewidth than might be expected, due to motion in an inhomogeneous system.

In the context of the present invention, a "low-temperature NH₃-SCR reaction" is an NH₃-SCR reaction that takes place within a temperature range of 150 to 200°C.

It has surprisingly been found that the onset temperature at which motional narrowing is detected in the ¹H-NMR spectrum of a copper-loaded small-pore zeolite is a good indicator for the catalytic activity of said copper-loaded small pore zeolite in the SCR reaction, in particular with regard to their low-temperature catalytic activity. In the context of the present invention, the catalytic activity of an SCR catalyst is the amount of nitrogen oxides NOₓ removed from an exhaust gas stream by said catalyst per amount of catalyst per time unit. Thus, the catalytic activity can either be indicated as moles of NOₓ removed per mass of the catalyst per time unit, for instance as µmol of NOₓ removed per grams of catalyst per second, or it can be indicated as moles of NOₓ removed per moles of active element per time unit, for instance as µmol of NOₓ removed per moles of active element per second. In this context, the "active element" is the component within the copper-loaded small-pore zeolite according to the present invention that effects the conversion of NOx. In the case of copper-loaded small-pore zeolites, the copper is the active element.
The skilled person knows that exhaust gas comprises a mixture of nitrogen oxides, written as NOₓ, for instance NO and NO₂. The skilled person also knows that the amount of NO and NO₂, respectively, within the NOₓ can be measured. This allows to determine the moles of each individual nitrogen oxide as well as the calculation of the total sum of moles of all nitrogen oxides present in the exhaust gas.

The terms "the zeolites" or "the zeolites according to the present invention" refer to all copper-loaded crystalline aluminosilicate zeolites having a motional narrowing temperature in the ¹H-NMR spectrum of between 10 and 373K, preferably 173 to 373 K, as disclosed herein, irrespective of whether they are substantially free of alkali, alkaline earth and transition metals or comprise said metals as described in the following.

Suitable crystalline aluminosilicate zeolites having a maximum pore size of eight tetrahedral atoms are, for instance, zeolite framework type materials chosen from ACO, AEI, AEN, AFN, AFT, AFX, ANA, APC, APD, ATT, BIK, CDO, CHA, DDR, DFT, EAB, EDI, EPI, ERI, ESV, ETL, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON and mixtures and intergrowths that contain at least one of these framework types.
In one embodiment of the present invention, the zeolites are chosen from AEI, AFT, AFX, CHA, DDR, ERI, ESV, ETL, KFI, LEV, UFI and mixtures and intergrowths thereof. Preferably, the zeolites are chosen from AEI, CHA, AFX and mixtures and intergrowths that contain at least one of these framework types. In a particularly preferred embodiment, the zeolite is AEI.

In one embodiment, the "mixtures and intergrowths that contain at least one of these framework types" consist only of zeolite framework types that are listed above, e.g. a physical mixture of CHA and AEI, a physical mixture of KFI and ESV, a physical mixture of LEV, ERI and BIK, an intergrowth of ERI and CHA, or an intergrowth of AFX and CHA. In another embodiment, the "mixtures and intergrowths that contain at least one of these framework types" comprise at least one of the zeolite framework types that are listed above, but also other zeolite framework types. Examples are a physical mixture of CHA and GME or an intergrowth or a physical mixture of ERI and OFF.

Exemplary isotypic framework structures of the zeolite framework type materials listed above are listed in Table 1:

| Zeolite Framework Type | Isotypic framework structures |
|---|---|
| ACO | ACP-1 |
| AEI | SIZ-8 |
| | SSZ-39 |
| AEN | CoIST-2 |
| | IST-2 |
| | JDF-2 |
| | MCS-1 |
| | Mu-10 |
| | UiO-12-500 |
| | UiO-12-as |
| AFX | SSZ-16 |
| ANA | Analcime |
| | Hsianghualite |
| | Leucite |
| | Pollucite |
| | Wairakite |
| ATT | RMA-3 |
| BIK | EU-7 |
| | Bikitaite |
| CDO | CDS-1 |
| | MCM-65 |
| | UZM-25 |
| CHA | Chabazite |
| | DAF-5 |
| | Linde D |
| | Linde R |
| | LZ-218 |
| | Phi |
| | SSZ-13 |
| | SSZ-62 |
| | UiO-21 |
| | Wilhendersonite |
| | ZK-16 |
| | ZYT-6 |
| DDR | Deca-dodecasil 3R |
| | Sigma-1 |
| | ZSM-58 |
| DFT | DAF-2 |
| EAB | TMA-E |
| | Belbergite |
| EDI | Edingtonite |
| | K-F |
| | Linde F |
| | Zeolite N |
| EPI | Epistilbite |
| ERI | Erionite |
| | Linde T |
| | LZ-220 |
| | ZSM-34 |
| ESV | ERS-7 |
| GIS | Gismondine |
| | Garronite |
| | Gobbinsite |
| | TMA-Gismondine |
| GOO | Goosecreekite |
| IHW | ITQ-32 |
| ITE | ITQ-3 |
| | Mu-14 |
| | SSZ-36 |
| LEV | Levyne |
| | LZ-132 |
| | NU-3 |
| | ZK-20 |
| KFI | ZK-5 |
| | P |
| | Q |
| MER | Merlinoite |
| | K-M |
| | Linde W |
| | Zeolite W |
| MON | Montesommaite |
| NSI | Nu-6(2) |
| OWE | UiO-28 |
| | ACP-2 |
| PAU | Paulingite |
| | ECR-18 |
| PHI | Phillipsite |
| | DAF-8 |
| | Harmotome |
| | Wellsite |
| | ZK-19 |
| RHO | Rho |
| | LZ-214 |
| | Pahasapaite |
| RTH | RUB-13 |
| | SSZ-36 |
| | SSZ-50 |
| SAT | STA-2 |
| SIV | SIZ-7 |
| THO | Thomsonite |
| TSC | Tschortnerite |
| UEI | Mu-18 |
| UFI | UZM-5 |
| VNI | VPI-9 |
| YUG | Yugawaralite |
| | Sr-Q |
| ZON | UiO-7 |

Methods to synthesize the aluminosilicates having a maximum pore size of eight tetrahedral atoms are known to the skilled person.

In one embodiment of the present invention, the silica to alumina molar ratio (SiO₂/Al₂O₃) of the zeolites according to the present invention ranges from 4 to 30, preferably 5 to 20, even more preferably 5.2 to 18.2. Hereinafter, the silica to alumina molar ratio is abbreviated as SAR.

In one embodiment of the present invention, the zeolites according to the present invention comprise copper in a concentration of 0.1 to 10 wt.-%, calculated as copper (Cu) metal and based on the total weight of the zeolite.
In one embodiment, the copper is introduced during the synthesis of the respective zeolite, for instance by an organic structure-directing agent (OSDA) comprising a copper cation. In this case, the copper content of the zeolite obtained after calcination can be adjusted according to the intended use of the zeolite. "Adjusting" means that the copper content can be left unaffected, or a part of the copper can be removed by ion exchange, or additional copper can be introduced into the zeolite.
In another embodiment, the copper is introduced after the synthesis of the zeolite. In this case, the loading with the copper is preferably carried out on the zeolites obtained after the calcination step.
The introduction of copper and the adjustment of the copper content are explained in more detail below.

In one embodiment of the present invention, the copper to aluminum atomic ratio is in the range of between 0.003 to 0.5, preferably 0.15 to 0.40, even more preferably 0.16 to 0.38. The skilled person knows how to adjust the amount of copper which is introduced during synthesis or via ion exchange to yield the desired copper to aluminum ratio. He can make use of this knowledge without departing from the scope of the claims.

In one embodiment of the present inventions, the zeolites of the present invention comprise at least one alkali or alkaline earth metal in a concentration of 0 to 2 wt.-%, preferably 0.001 to 0.5 wt.-%, calculated as the pure metals and based on the total weight of the zeolite.
In a preferred embodiment, the at least one alkali or alkaline earth metal is introduced during the synthesis of the respective zeolite, for instance by an alkali or alkaline earth metal hydroxide, an alkali metal silicate, an alkali metal aluminate, and the like. In this case, it is preferred not to introduce additional alkali or alkaline earth metals. Compounds that can be used in the synthesis of zeolites and that comprise alkali and/or alkaline earth metals are known to the skilled person. They can be used without departing from the scope of the claims.
In an alternative embodiment, alkali and/or alkaline earth metals can be introduced after the synthesis of the zeolite via ion exchange methods as described above.

In case alkali and/or alkaline earth metals shall be introduced, the introduction of the at least one alkali or alkaline earth metal cation can be carried out after, before or concomitantly with the introduction of the at least one transition metal cation as explained above. The skilled person knows which alkali or alkaline earth metal salts are suitable for the introduction of the respective cations via ion exchange. He can make use of this knowledge without departing from the scope of the claims.
The at least one alkali or alkaline earth metal is selected from lithium, sodium, potassium, rubidium, caesium, magnesium, calcium, strontium and barium. In a preferred embodiment, the alkali or alkaline earth metal is selected from sodium, potassium and mixtures thereof. More preferably, the alkali metal is potassium.

As mentioned above, the inventors of the present invention have found that the onset temperature at which motional narrowing in the ¹H-NMR spectrum of a copper-loaded small-pore zeolite occurs is correlated to the catalytic activity of said zeolite. Generally spoken, motional narrowing can occur with samples carrying paramagnetic elements, such as Cu²⁺ ions, and it is described in the prior art as the narrowing or sharpening of NMR signals with increasing temperature due to the increasing mobility of the paramagnetic species partially negating the otherwise broadening effect of such species on the observation of NMR active elements in their vicinity.

According to the present invention, the motional narrowing of the copper-loaded small-pore zeolites is measured as follows:
It is known to the skilled person that Cu²⁺, being paramagnetic, greatly accelerates the relaxation of NMR sensitive nuclei. This results in a broadening effect on the NMR signals, up to the point of making them invisible on the NMR spectrum. This phenomenon is known as "blinding of the NMR signal". The extent of this influence varies greatly depending on the proximity of the Cu to the observed nucleus and on the time, both spend in each other's vicinity. At lower temperatures, the Cu is expected to be fairly immobile in the zeolite framework, thus greatly broadening or even blinding signals from atoms in its immediate proximity. Upon heating, the mobility of the Cu ions increases, which in turn decreases its broadening/blinding effect on the surrounding nuclei. This translates to NMR signals becoming distinguishable from other signals only from and above a certain temperature. The temperature at which this occurs is strongly related to the SCR activity of the material.

In one embodiment of the measurement of the motional narrowing according to the present invention, the as-made zeolite is packed in a 4 mm zirconia solid state NMR rotor and dried under vacuum (1 mbar) at 90 °C for 30 min and at 200 °C for 16h. After flushing with N₂ gas, the rotor is sealed.
¹H MAS NMR experiments were performed on a Bruker Ultrashield Plus 500 MHz spectrometer (static magnetic field of 11.7 T) equipped with a 4 mm H/X/Y magic angle spinning (MAS) solid-state probe. Samples were spun at 15 kHz. ¹H spectra were recorded using a π/2 flip angle with a radio frequency pulse of 84.7 kHz, a repetition delay of 7 s and 16 scans in total. Adamantane (δ(1H) = 1.81 ppm) was used as an external secondary reference for the chemical shift referencing to tetramethyl silane (TMS) (δ(1H) = 0 ppm). Such spectra were recorded at temperatures ranging from 173K to 373K with intervals of 20K.
The temperature at which previously blinded/broadened ¹H signals in the range between 0.7 and 2.5 ppm appear with increasing temperature, is defined as the onset temperature (with an error bar of ±10K) of the motional narrowing behaviour.
The given equipment is limited to the specified temperature range. With the current experimentally determined correlation between activity and onset temperature of the motional narrowing behaviour (activity = (-0.02009 ^{∗} onset temperature) + 8.99313) this would translate to a maximum observable activity of 5.52 µmol NO / (g catalyst*s) using this equipment.

Optionally, the following procedure can be followed to determine the onset temperature of the motional narrowing behaviour with greater precision. First, in the series of ¹H NMR spectra of the Cu-loaded zeolite recorded at temperatures ranging from 173K to 373K, each spectrum is divided by the previous spectrum recorded at a 20K lower temperature. The resulting spectra are then baseline corrected between 5 and 0 ppm to insure a flat baseline for all spectra. Subsequently, the spectra are integrated and the integrated values are plotted against the temperature of the original measurement. Each point corresponds to an increase of signal surface area at a given temperature compared to the signal surface area acquired at a 20K lower temperature. The plotted points are then normalized to the maximum observed increase in signal surface area for that sample. A signal is considered to have appeared at the lowest temperature where the increase in signal surface area goes beyond the threshold of 10% of the maximum observed increase in signal surface area. The onset temperature of the motional narrowing behaviour is then equal to the median of the lowest temperature where the increase in signal surface area goes beyond the threshold of 10% of the maximum observed increase in signal surface area and the 20K lower temperature.
It is obvious that this calculation method is also suited for ¹H NMR spectra that are recorded at temperatures lower than the above-mentioned 173 K. Given a suitable equipment, the measurement method and the calculation can be used up to temperatures as low as 10 K (-263°C), and the skilled person can do this using the information given above and common knowledge without departing from the scope of the claims.

The zeolites according to the present invention, having an onset temperature at which motional narrowing is detected in the ¹H-NMR spectrum of between 10 and 373K, preferable between 171 and 373 K, show an improved catalytic activity in the NH₃-SCR reaction at low temperatures. "Low temperatures" in the NH₃-SCR reaction are temperatures of between 150 and 200°C.

Known methods to synthesize zeolites comprise the preparation of reaction mixtures comprising a silica source and an alumina source and combining them. The reaction mixtures generally comprise alkali and alkaline earth metal hydroxides and structure directing agents. Instead of using separate silicon and alumina sources, some known processes for the synthesis of zeolites make use of a precursor zeolite such as faujasite, which, in combination with alkali and alkaline earth metal hydroxides and structure directing agents, allows for the synthesis of other zeolites such as chabazite.
A reaction mixture comprising the silicon and alumina sources, at least one alkali and/or alkaline earth metal hydroxide, at least one structure directing agent (SDA) and water is hereinafter referred to as "the gel". Gels suitable to synthesize crystalline aluminosilicate zeolites having a maximum pore size of eight tetrahedral atoms, wherein the zeolite has an onset temperature at which motional narrowing is detected in the ¹H-NMR spectrum of between 10 and 373 K, preferably 173 and 373K, have the following molar composition:
SiO₂ : a Al₂O₃ : b SDA1 : c Me(OH)ₙ : d H₂O, wherein
a ranges between 0.005 and 0.05, preferably between 0.007 and 0.043,
b ranges between 0.02 and 1, preferably between 0.023 and 0.82,
Me(OH)ₙ is an alkali or alkaline earth metal hydroxide,
   wherein
   Me is selected from Li, Na, K, Rb, Cs, Ca, Mg, Sr, Ba and mixtures thereof,
   n = 1 for an alkali metal selected from Li, Na, K, Rb, Cs,
   n = 2 for an alkaline earth metal selected from Ca, Mg, Sr, Ba, and
   c ranges between 0.1 and 1.2 for n = 1, and
   c ranges between 0.005 and 0.6 for n = 2, and
   the product c^{∗}n ranges between 0.01 and 1.2,
d ranges between 16 and 63.
The product c^{∗}n represents the molar amount of OH groups. It ranges between 0.01 and 1.2, irrespective of whether only alkali metal hydroxides, only alkaline earth metal hydroxides of mixtures of alkali and alkaline earth metal hydroxides are used.
Optionally, the gel may additionally comprise a second SDA, referred to as SDA 2, and/or other organic components such as glycerol, hexamethonium bromide, and/or salts of alkali and/or alkaline earth metals, preferably halides thereof.
The skilled person knows which second SDAs, other organic components and salts of alkali and alkaline earth metals can be used in the synthesis of zeolites. He can make use of this knowledge without departing from the scope of the claims.
The reaction mixtures, i.e. the gels as described above, comprising the silica source, the alumina source or the precursor zeolite are usually stirred and can optionally be aged afterwards. Subsequently, the reaction mixture is heated at temperatures of between 70°C and 190°C for 2 hours to 25 days, washed and dried at a temperature of between 60°C and 80°C for 8 to 36 hours. In a preferred embodiment, the reaction mixtures comprising the silica source, the alumina source or the precursor zeolite is stirred for 10 to 50 minutes at a temperature of 20 to 40°C, preferably at room temperature (25°C) under stirring. Subsequently, the reaction mixture is heated at temperatures of between 70°C and 190°C for 2 hours to 25 days under dynamic conditions. Afterwards, the zeolite formed is calcined at a temperature of between 400°C and 850°C or 4 to 24 hours, preferably at 550°C to 750°C, even more preferably at 550°C to 650°C, for 6 to 21 hours. Optionally, the calcination can be carried out in a two-step process, for instance by first calcining it in a nitrogen atmosphere, followed by a second calcination step in an oxygen atmosphere.
As already mentioned, these methods are known to the skilled person and can be applied without departing from the scope of the claims.

As mentioned above, it is well known that alkali, alkaline earth metal and transition metal cations can be removed from or introduced into a zeolite via ion exchange reactions.

These ion exchange reactions are exemplarily described hereinafter for the introduction of alkali and alkaline earth metal cations and for transition metal cations, respectively. The skilled person knows how to adapt these ion exchange reactions to obtain a zeolite with a desired cation content. The reactions described also include steps wherein metal cations are removed via the introduction of ammonium cations, followed by thermal decomposition thereof during calcination.

Copper, for instance, can be introduced via ion exchange. In a first step, an ammonium exchange is performed in order to remove alkali or alkaline earth metal cations from the zeolite framework by replacing them with NH₄⁺ cations. In a second step, NH₄⁺ is replaced by copper cations. The copper content of the resulting copper-containing small-pore zeolite can be easily controlled via the amount of copper salt and the number of ion exchange procedures performed.

Methods for introducing ammonium and copper cations, respectively, are well known to the skilled artisan. They can be applied to the calcined zeolites according to the present invention without departing from the scope of the claims. For example, ammonium cations can be easily introduced via liquid ion exchange, and copper cations can also easily be introduced via liquid ion exchange, incipient wetness impregnation or solid state ion exchange.

Said methods are presented exemplarily hereinafter. These methods are applicable to obtain zeolites according to the present invention which are loaded a) with transition metals like copper and/or iron and/or b) with alkali and/or alkaline earth metals. If a ¹H MAS NMR measurement shall be carried out, the ion exchange procedure as described above for the preparation of zeolite samples for said measurements has to be carried out.

### Liquid ion exchange

An NH₄⁺ liquid ion exchange can be performed at 100 °C in an aqueous suspension under reflux conditions. 100 ml of a 0.5 M aqueous NH₄Cl or NH₄NO₃ solution is used per 1 g of the zeolite.

A Cu²⁺ liquid ion exchange is performed at room temperature for 20 h. 100 ml of an aqueous copper acetate (Cu(Ac)₂), copper nitrate (Cu(NO₃)₂) or copper chloride (CuCl₂) solution per 1 g zeolite is used, corresponding to 0.03 g Cu per 1 g zeolite. This procedure can be repeated multiple times in order to achieve the desired copper content.

It is obvious for the skilled person that the copper to zeolite ratio in liquid ion exchange can be adjusted according to the desired copper content of the final zeolite. Generally spoken, aqueous solutions with higher copper contents yield higher copper-containing zeolites. The skilled person may, for instance, choose aqueous copper salt solutions having a copper content of 0.03 to 0.1 g copper per 1 g zeolite in order to yield copper-containing zeolites according to the present invention, said Cu-containing zeolites having a Cu content of from 0.1 to 10-wt.-%, preferably from 2 to 5 wt.-% and even more preferably from 2.2 to 4.9 wt.-%, calculated as copper (Cu) metal and based on the total weight of the zeolite. Which copper concentration per 1 g zeolite should be chosen and how often the procedure shall be repeated can easily be determined by the skilled person without departing from the scope of the claims.

Optionally, the ammonium-exchanged zeolite can be subjected to heat treatment in order to decompose the ammonium ions. Subsequently, the copper exchange can be carried out as described above.

### Incipient wetness impregnation

An aqueous solution of copper acetate (Cu(Ac)₂), copper nitrate (Cu(NO₃)₂) or copper chloride (CuCl₂) is used in a volume equal to the zeolite pore volume. The amount of copper acetate, chloride or nitrate is equal to the amount of copper preferred in the zeolite. The incipient wetness impregnation is carried out at room temperature. Afterwards, the copper-exchanged zeolite is dried at temperatures between 60 and 70 °C for 8 to 16 hours, and the mixture is subsequently heated to temperatures in the range of 550 to 900 °C.

### Solid state ion exchange

Suitable copper salts are, for instance, copper acetate (Cu(Ac)₂), copper nitrate (Cu(NO₃)₂), copper chloride (CuCl₂), copper(II) oxide (CuO), copper(I) oxide (Cu₂O) and copper acetylacetonate (Cu(acac)₂). The copper salt and the zeolite are mixed in a dry state, and the mixture is subsequently heated to temperatures in the range of 550 to 900 °C. A process for producing metal doped zeolites is, for instance, disclosed in US 2013/0251611 A1. This process may be applied to the zeolites of the present invention without departing from the scope of the claims.

Introducing iron into the zeolite can be performed in the same manner as described for the introduction of copper. Suitable salts for an iron ion exchange can be Fe²⁺ or Fe³⁺ salts, preferably Fe³⁺ salts such as FeCl₃, Fe₂(SO₄)₃, Fe(NO₃)₃, and Fe(Ac)₃.

Analogously, alkali or alkaline earth metals can be exchanged against one another or against NH₄⁺. Suitable alkali or alkaline earth metal compounds for introducing these metals are the respective hydroxides, for instance NaOH and KOH. If the amount of alkali or alkaline earth metals shall be reduced, the zeolite is mixed with an aqueous NH₄Cl solution and heated up to the boiling point. The zeolite is recovered by filtration and washing with deionized water and then dried. Repeating this procedure for one or more times further reduces the content of alkali or alkaline earth metal cations. It is also possible to perform an NH₄⁺ wet ion exchange as described above, followed by a liquid ion exchange with other alkali or alkaline earth metal cations. Suitable alkali or alkaline earth metal salts which can be used in such a liquid ion exchange are well known to the skilled person. They comprise, for instance, the chlorides, bromides nitrates, sulfates and acetates of lithium, sodium, potassium, rubidium, caesium, magnesium, calcium, strontium and barium, depending on the cations shall be introduced into the final zeolite for use in SCR. It is also possible to combine exchange steps for introducing alkali or alkaline earth metals cations and copper cations. If both copper cations and alkali or alkaline earth metal cations shall be introduced, it is possible
1. to introduce the alkali or alkaline earth metal cations first, followed by the introduction of copper cations,
2. to introduce the copper cations first, followed by the introduction of alkali or alkaline earth metal cations, or
3. to introduce alkali or alkaline earth metal cations and copper cations concomitantly.

Which one of the three options to introduce both alkali and alkaline earth metal cations and copper will be chosen depends on where these cations shall be placed within the zeolite and which use of the zeolite thus obtained is intended. The skilled person knows how to find the most suitable of these three options by routine experiments. He can make use of this knowledge without leaving the scope of protection of the claims.

In one embodiment of the present invention, an NH₄⁺ liquid ion exchange is performed first, followed by a Cu²⁺ and/or Fe³⁺ liquid ion exchange, incipient wetness impregnation or solid state exchange Optionally, an alkali or alkaline earth metal can additionally be introduced, either prior or after the introduction of the at least one transition metal.

In another embodiment, an NH₄⁺ liquid ion exchange is performed to reduce or to completely remove the concentration of the transition metals, the alkali metals and/or the alkaline earth metals which were introduced into the zeolite during the synthesis, followed by a decomposition of the NH₄⁺ ions as described above. Furthermore, ion exchange techniques as described above can be used to reduce the concentration of one group of the metal cations, e.g. the alkali or alkaline earth metal cations, and to introduce another group of metal cations, for instance transition metal cations such as Cu²⁺ and/or Fe³⁺ ions, or vice versa.

In general, methods for the synthesis of zeolites comprise the use of compounds of alkali or alkaline earth metals, for instance the use of hydroxides like NaOH or KOH. Furthermore, the methods require the use of structure-directing organic agents, also known as SDAs or OSDAs, which may comprise transition metals, for example the well-known OSDA Cu-tetraethylenepentamine (Cu-TEPA) for the synthesis of chabazite.
Therefore, in one embodiment of the present invention, the at least one transition metal, preferably copper, is introduced into the zeolites according to the present invention during the synthesis of said zeolite by an organic structure-directing agent comprising said at least one transition metal. In a preferred embodiment, the organic structure-directing agent is Cu-TEPA, and the zeolite according to the present invention which is synthesized by means of Cu-TEPA is chabazite.

The zeolites according to the present invention can be used in a process for the removal of NOₓ from automotive combustion exhaust gases. In this process, also known as SCR (selective catalytic reduction), these zeolites are used as the catalytically active materials for the conversion of NOₓ. The conversion of NOₓ is particularly necessary during lean burn operation of internal combustion engines. Therefore, the use of the zeolites according to the present invention as the catalytically active material for the conversion of NOx is applicable in both diesel and gasoline engines, in particular when a DeNOₓ activity under lean burn operation is needed.
Zeolites which are used as SCR catalytically active materials require the presence of at least one transition metal, in particular the presence of copper and/or iron to enable the SCR reaction to happen in the first place.

As mentioned above, the zeolites according to the present invention can be used for the preparation of SCR catalysts. Furthermore, they are suitable ion exchangers. They can also be used as molecular sieves and as catalysts in a large variety of reactions. Well-known uses of zeolites include, for instance, fluid catalytic cracking, hydrocracking, hydrocarbon conversion reactions, reprocessing methods and heat accumulation.

In the present invention, a "catalyst" or "catalytic system" refers to a component of an exhaust purification system comprising a catalytically active material and a carrier, a housing or the like. Such catalytic systems are often referred to as "monoliths". The catalytically active material is the chemical compound or mixture of compounds which effects the conversion of harmful exhaust gases into non-hazardous gases. An SCR catalytically active material, for instance, converts NOₓ into N₂ and H₂O.

Hereinafter, the following abbreviations are used for catalysts used in automotive exhaust purification systems, mainly lean burn engines:

| | |
|---|---|
| SCR | Catalyst for selective catalytic reduction |
| DOC | Diesel oxidation catalyst |
| DPF | Diesel particulate filter |
| SDPF | Diesel particulate filter (DPF) coated with an SCR catalyst |
| CDPF | Catalysed Diesel particulate filter = DPF coated with a DOC |
| LNT | Lean NOₓ trap |
| ASC | ammonia slip catalyst |
| PNA | Passive NOₓ adsorption catalyst |

These catalytic systems, i.e. the SCR, the DOC, the DPF, the SDPF, the CDPF, the LNT, the PNA and the ASC can, independently from one another, be composed of one or more monoliths having different dimensions and forms.
In one embodiment of the present invention, a catalysed substrate monolith comprises an SCR catalytically active material for the conversion of NOₓ for use in treating automotive combustion exhaust gases, wherein said SCR catalytically active material for the conversion of NOₓ is a zeolite according to the present invention.

Exhaust emissions of vehicles driven by a predominantly lean combustion engine contain, in addition to particle emission, in particular the primary emissions carbon monoxide CO, hydrocarbons HC, and nitrogen oxides NOₓ. Due to the relatively high oxygen content of up to 15 vol.%, carbon monoxide and hydrocarbons can be rendered harmless by oxidation fairly easy, but the reduction of the nitrogen oxides to nitrogen is much more difficult to achieve.

The SCR catalytically active materials may, for instance, be obtained by solid state sublimation. For this purpose, a dry, intimate mixture of the zeolite and a transition metal salt, preferably a copper or iron salt or a mixture of copper and iron salts, as described above under "solid state ion exchange" is made. Said mixture is then heated to a temperature of 550 to 900°C, whereby the transition metal salt decomposes into the metal (e.g. copper or iron) or the metal ion (e.g. the copper or iron ion). Subsequently, the mixture is heated at a temperature and for a time span sufficient to achieve the solid state sublimation of copper into the respective zeolite framework type material.
The powder thus obtained is then dispersed in water and mixed with a binder. Suitable binders are based on the oxides of Al, Zr, Ti or Si, e.g. boehmite and silica gel. Afterwards, this mixture comprising water, a binder, and the stable small-pore zeolite material only needs to be stirred or homogenized, respectively, and may be applied directly as a coating suspension to coat a carrier substrate. The coating suspension is hereinafter referred to as the "washcoat".
In an alternative embodiment, the SCR catalytically active materials according to the present invention may be manufactured by adding a water-soluble transition metal salt, preferably a copper or iron salt or a mixture thereof, as described above under "liquid ion exchange", to water followed by adding this salt solution to the zeolite powder. A particularly suitable copper salt is copper acetate. After this liquid ion exchange, the transition containing zeolite framework type material thus obtained is then dispersed in water and mixed with a binder to form a washcoat as described above.
Typically, the washcoat loading on a carrier substrate is in the range of between 120 and 250 g/l.

In some embodiments of the SCR catalytically active materials according to the present invention, said SCR catalyst is present in the form of a coating on a carrier substrate, i.e. as a washcoat on a carrier substrate. Carrier substrates can be so-called flow-through substrates or wall-flow filters, respectively.
Both carrier substrates may consist of inert materials, such as silicon carbide, aluminum titanate, cordierite, metal or metal alloys. Such carrier substrates are well-known to the skilled person and available on the market.
In other embodiments, the carrier substrates may be catalytically active on their own, and they may comprise catalytically active material, e.g. SCR-catalytically active material. SCR-catalytically active materials which are suitable for this purpose are basically all materials known to the skilled person, for example catalytically active materials based on mixed oxides, or catalytically active materials based on copper-exchanged, zeolitic compounds. Mixed oxides comprising compounds of vanadium, titanium and tungsten are particularly suitable for this purpose.
In addition to the catalytically active material, these carrier substrates comprise a matrix component. All inert materials which are otherwise used for the manufacturing of catalyst substrates may be used as matrix components in this context. It deals, for instance, with silicates, oxides, nitrides or carbides, with magnesium aluminum silicates being particularly preferred.

In other embodiments of the SCR catalysts according to the present invention, the catalyst itself forms part of the carrier substrate, for example as part of a flow-through substrate or a wall-flow filter. Such carrier substrates additionally comprise the matrix components described above.

Carrier substrates comprising the SCR catalytically active materials according to the present invention may be used as such in exhaust purification. Alternatively, they may be coated with catalytically active materials, for example with SCR-catalytically active materials. Insofar as these materials shall exhibit an SCR catalytic activity, the SCR catalytically active materials mentioned above are suitable materials.

In one embodiment, catalytically active carrier materials are manufactured by mixing 10 to 95 wt.-% of at least one inert matrix component and 5 to 90 wt.-% of a catalytically active material, followed by extruding the mixture according to well-known protocols. As already described above, inert materials that are usually used for the manufacture of catalyst substrates may be used as the matrix components in this embodiment. Suitable inert matrix materials are, for example, silicates, oxides, nitrides and carbides, with magnesium aluminum silicates being particularly preferred. Catalytically active carrier materials obtainable by such processes are known as "extruded catalysed substrate monoliths".

The application of the catalytically active catalyst onto either the inert carrier substrate or onto a carrier substrate which is catalytically active on its own as well as the application of a catalytically active coating onto a carrier substrate, said carrier substrate comprising a catalyst according to the present invention, can be carried out following manufacturing processes well known to the person skilled in the art, for instance by widely used dip coating, pump coating and suction coating, followed by subsequent thermal post-treatment (calcination).

The skilled person knows that in the case of wall-flow filters, their average pore sizes and the mean particle size of the catalysts according to the present invention may be adjusted to one another in a manner that the coating thus obtained is located onto the porous walls which form the channels of the wall-flow filter (on-wall coating). However, the average pore sizes and the mean particle sizes are preferably adjusted to one another in a manner that the catalyst according to the present invention is located within the porous walls which form the channels of the wall-flow filter. In this preferable embodiment, the inner surfaces of the pores are coated (in-wall coating). In this case, the mean particle size of the catalysts according to the present invention has to be sufficiently small to be able to penetrate the pores of the wall-flow filter.

In another embodiment, the catalysed substrate monolith is a corrugated catalysed substrate monolith. The substrate has a wall density of at least 50g/l but not more than 300g/l and a porosity of at least 50%. The substrate monolith is a paper of high silica content glass or a paper of E-glass fibre. The paper has a layer of diatomaceous earth or a layer of titania, and the catalyst is a zeolite according to the present invention. This corrugated substrate monolith has the advantage that the catalytic zeolite layer does not peel off from the monolithic substrate during start and stop of a combustion engine. The SCR catalytically active material is applied on a monolithic substrate, which has the form of plane or corrugated plates. The substrate is made from sheets of E-glass fibres or from sheets of a glass with high silicon content and with a layer of TiO₂ or diatomaceous earth. The high silicon content glass contains 94-95% by weight SiO₂, 4-5% by weight Al₂O₃ and some Na₂O, these fibres have a density of 2000-2200 g/1 with a fibre diameter is 8-10 µm. An example is the commercially available SILEX staple fiber. The E-glass contains 52-56% by weight SiO₂, 12-16% by weight Al₂O₃, 5-10% by weight B₂O₃, 0-1.5 % by weight TiO₂, 0-5% by weight MgO, 16-25% by weight CaO, 0-2% by weight K₂0/Na₂0 and 0-0.8% by weight Fe₂O₃. The material of the substrate is chosen in a manner that the density of the substrate is at least 50g/l, but not higher than 300g/l material, and the porosity of the substrate wall is at least 50% by volume of the material. The porosity of the monolithic substrate is obtained by the pores, which have a depth between 50 µm and 200 µm and a diameter between 1 µm and 30 µm. The SCR catalytically active material is applied on the substrate as a layer with a thickness of 10-150 µm. The SCR catalytically active material is a zeolite according to the present invention. The catalyst is applied by dipping the monolithic substrate into aqueous slurry of fine particles of zeolite, a binder and an anti-foam agent. The size of the particles is not more than 50 µm. The binder is preferably a silica sol binder, and the antifoam agent is a silicone antifoam agent. The coated substrate is dried and subsequently calcinated at 400-650°C, preferably 540-560°C, most preferably at 550°C. A catalyst element comprises layers of corrugated plates, which are separated from each other by plane plates. Catalyst elements can be in the form of boxes or cylinders. Corrugated substrate monoliths and their manufacture are disclosed in WO 2010/066345 A1, and the teaching thereof can be applied to the present invention without departing from the scope of the claims.

The catalysts according to the present invention may advantageously be used for the exhaust purification of lean combustion engines, in particular for diesel engines. They convert nitrogen oxides comprised in the exhaust gas into the harmless compounds nitrogen and water.
Commonly known exhaust gas purification systems for diesel engines are often formed by arranging an oxidation catalyst (DOC) having an oxidative function for carbon monoxide and hydrocarbons and optionally nitrogen monoxide and aforementioned selective catalytic reduction type catalyst (SCR), in a flow path of exhaust gas, characterized in that a spraying means to supply an urea aqueous solution or an aqueous ammonia solution or gaseous ammonia is arranged downstream of the aforementioned oxidation catalyst and upstream of aforementioned selective catalytic reduction type catalyst. The skilled person knows that the DOC catalyst might also be replaced by a passive NOx adsorber catalyst (PNA) or NOₓ storage catalyst (NSC) which is able to store NOx from the exhaust gas at lower temperatures and to desorb the NOₓ thermally at higher temperatures (PNA) or reduce the NOx directly by means of a reductant like rich exhaust gas (Lambda < 1) or other reducing agents like fuel (NSC), respectively. The PNA or NSC catalysts preferably also contain catalytic functions for the oxidation of carbon monoxide and hydrocarbons as well as optionally the oxidation of nitrogen monoxide. Furthermore, a diesel particulate filter (DPF) for filtering out soot is often arranged in the system together with the DOC (or NSC) catalyst and the SCR catalyst. In these arrangements, combustible particle components are deposited on the DPF and combusted therein. Such arrangements are, for instance, disclosed in EP 1 992 409 A1. Widely used arrangements of such catalysts are, for example (from upstream to downstream):
(1) DOC + (NH₃) + SCR
(2) DOC + DPF + (NH₃) + SCR
(3) DOC + (NH₃) + SCR + DPF
(4) DOC + (NH₃) + SCR + DOC + DPF
(5) DOC + (NH₃) + SDPF + (NH₃ opt.) + SCR
(6) DOC + CDPF + (NH₃) + SCR
(7) (NH₃) + SCR + DOC + CDPF (NH₃ opt.) + SCR
(8) (NH₃) + SCR + DOC + SDPF + (NH₃ opt.) + SCR
(9) (NH₃) + SCR + ASC
(10) DOC + (NH₃) + SCR + SDPF + (NH₃ opt.) + SCR
(11) DOC + (NH₃) + SDPF + SCR + (NH₃ opt.) + SCR
In the above examples (1) to (11), (NH₃) represents a position where an urea aqueous solution, an aqueous ammonia solution, ammonium carbamate, ammonium formiate or another reducing agent reducing NOₓ via the SCR reaction selectively is supplied as a reducing agent by spraying. The supply of such urea or ammonia compounds in automotive exhaust gas purification systems is well known in the art. (NH₃ opt.) in the systems 5, 7, 8, 10 and 11 above means that said second source of urea or ammonia compounds is optional. The catalysts containing the high thermal stable zeolites according to the present invention are preferably positioned close to the engine or close to the DPF, since here the temperatures are highest in the system. Preferably the zeolite materials of the present invention are used on the SDPF or catalysts closely positioned to the filter like in system 10 and 11 where one SCR catalyst is located directly upstream or downstream the SDPF, respectively without additional NH₃ dosing in-between these two catalysts. Also the first SCR catalyst of systems 7 to 9 which is close coupled to the engine is a preferred embodiment of the present invention.

Hence, the present invention furthermore refers to a method for the purification of exhaust gases of lean combustion engines, characterized in that the exhaust gas is passed over a catalyst according to the present invention. Lean combustion engines are diesel engines, which are generally operated under oxygen rich combustion conditions, but also gasoline engines which are partly operated under lean (i.e. oxygen rich atmosphere with Lambda > 1) combustion conditions. Such gasoline engines are, for instance, lean GDI engines or gasoline engines which are using the lean operation only in certain operation points of the engine like cold start or during fuel cut events. Due to the high thermal stability of the zeolites according to the present invention these zeolites might also be used in exhaust systems of gasoline engines. In this case a PNA, SCR or ASC catalyst according to the present invention might be arranged in combination with aftertreatment components typically used to clean exhaust emissions from gasoline engines like three way catalysts (TWC) or gasoline particulate filters (GPF). In these cases, the above mentioned system layouts 1-11 are modified by replacing the DOC catalyst by a TWC catalyst and the DPF or CDPF by a GPF. In all those systems the dosing of ammonia is optional since gasoline engines are able to produce ammonia in situ during operation over the TWC catalyst so that the injection of aqueous urea or ammonia or another ammonia precursor upstream of the SCR catalyst might not be needed. In case a PNA is used in those systems, the PNA will preferably be located as a first catalyst in the system close to the engine to have an early heat up. The PNA might also be located in an under-floor position to prevent thermal damage of the catalyst. In these positions the exhaust temperatures can be controlled in order to not exceed 900°C.

In a preferred embodiment of the process according to the present invention, ammonia is used as the reducing agent. The ammonia required may, for instance, be formed within the exhaust purification system upstream to a particulate filter by means of an upstream nitrogen oxide storage catalyst ("lean NOₓ trap" - LNT). This method is known as "passive SCR".
Alternatively, ammonia may be supplied in an appropriate form, for instance in the form of urea, ammonium carbamate or ammonium formiate, and added to the exhaust gas stream as needed. A widespread method is to carry along an aqueous urea solution and to dose it into the catalyst according to the present invention via an upstream injector as required.

The present invention thus also refers to a system for the purification of exhaust gases emitted from lean combustion engines, characterized in that it comprises a catalyst according to the present invention, preferably in the form of a coating on a carrier substrate or as a component of a carrier substrate, and an injector for aqueous urea solutions, wherein the injector is located upstream of the catalyst of the present invention.

For example, it is known from SAE-2001-01-3625 that the SCR reaction with ammonia proceeds more rapidly if the nitrogen oxides are present in a 1:1 mixture of nitrogen monoxide and nitrogen dioxide, or if the ratios of both nitrogen oxides are close to 1:1. As the exhaust gas from lean combustion engines generally contains an excess of nitrogen monoxide over nitrogen dioxide, this SAE paper suggest to increase the amount of nitrogen dioxide by means of an oxidation catalyst. The exhaust gas purification process according to the present invention may not only be applied in the standard SCR reaction, i.e. in the absence of nitrogen oxide, but also in the rapid SCR reaction, i.e. when part of the nitrogen monoxide has been oxidized to nitrogen dioxide, thus ideally providing a 1:1 mixture of nitrogen monoxide and nitrogen dioxide.

The present invention therefore also relates to a system for the purification of exhaust gases from lean combustion engines, characterized in that it comprises an oxidation catalyst, an injector for aqueous urea solutions and a catalyst according to the present invention, preferably in the form of a coating on a carrier substrate or as a component of a carrier substrate.
In a preferred embodiment of the exhaust gas purification system according to the present invention, platinum supported on a carrier support material is used as an oxidation catalyst.
Any carrier material for platinum and/or palladium which is known to the skilled person as suitable material may be used without departing from the scope of the claims. Said materials show a BET surface area of 30 to 250 m²/g, preferably 50 to 200 m²/g (measured according to DIN 66132). Preferred carrier substrate materials are alumina, silica, magnesium dioxide, titania, zirconia, ceria and mixtures and mixed oxides comprising at least two of these oxides. Particularly preferred materials are alumina and alumina/silica mixed oxides. If alumina is used, it is preferably stabilized, for instance with lanthanum oxide.
The exhaust gas purification system is arranged in an order wherein, in flow direction of the exhaust gas purification system, an oxidation catalyst is arranged first, followed by an injector for an aqueous urea solution, and finally a catalyst according to the present invention.
The skilled person knows that the exhaust gas purification system may comprise additional catalysts. A particulate filter may, for instance, be coupled with either the DOC, thus forming a CDPF, or with an SCR, thus forming an SDPF.
In on embodiment of the present invention, the exhaust gas purification system comprises a particulate filter coated with an SCR catalyst, wherein the SCR catalytically active material is a crystalline aluminosilicate zeolite according to the present invention.
The crystalline aluminosilicate zeolite according to the present invention can be coated into the walls of the filter (wall flow substrate) or on the surface of the filter walls. Also a combination of in-wall-coating and on-wall-coating is possible. The wall flow filter can be coated over the whole length of the filter or only partly from the inlet or from the outlet with the zeolite according to the present invention. Methods to apply a zeolite on such a filter are disclosed in WO 2017/178576 A1, WO 2018/029330 A1 and WO 2018/054928 A1. These methods are incorporated by reference.

Furthermore, the exhaust gas purification system may comprise a PNA. The PNA is a NOₓ storage device that adsorbs NOₓ at low temperatures. Once the exhaust temperatures increases, the stored NOₓ is released and reduced to nitrogen over a downstream catalyst, i.e. an SCR catalyst using ammonia, usually in the form of an aqueous urea solution, or an active, barium-based NSC. An NSC is a NOₓ storage catalyst.
In some PNA type catalysts, a combination of precious metals and zeolites is used for NOₓ trapping. The precious metal is a platinum group metal selected from ruthenium, rhodium, palladium, osmium, iridium, platinum and mixtures thereof. Preferably, the precious metal is chosen from palladium, platinum and mixtures thereof, more preferably, the precious metal is palladium. The total amount of the platinum group metal or the mixture is present in a concentration of 0.01 to 10 wt.-%, preferably 0.05 to 5 wt.-%, even more preferably 0.1 to 3 wt.-%, calculated as the respective platinum group metal and based on the total weight of the zeolite. In a preferred embodiment, the platinum group metal is palladium, and it is present in a concentration of 0.5 to 5 wt.-%, calculated as Pd and based on the total weight of the zeolite. In such a PNA, the NOₓ trapping efficiency is influenced by the nuclearity and the oxidation state of Pd. The dispersion and lower oxidation states of Pd facilitate NOₓ adsorption. The NOₓ release temperature is dependent on the zeolite structure and is higher for small pore zeolites and lowest for large pore zeolites.
In one embodiment of the present invention, the exhaust purification system comprises a PNA catalyst, wherein the PNA catalytically active material comprises a crystalline aluminosilicate zeolite according to the present invention and at least one precious metal selected from palladium, platinum, and mixtures thereof.
The platinum group metals may be introduced into the PNA via ion exchange of suitable PGM precursor salts as described above or via incipient wetness impregnation treatment of the zeolite or via injection of a PGM salt solution into an aqueous washcoat slurry. The skilled person knows that suitable precious metal precursor salts are the nitrates, acetates, sulfates and amine type complexes of the respective precious metals. He can apply this knowledge without departing from the scope of the claims.

The exhaust gas purification system may furthermore comprise an ammonia oxidation catalyst (ASC). It is well known to the skilled person that an ASC is preferably located downstream of the SCR, because recognizable amounts of NH₃ leave the SCR due to the dynamic driving conditions. Therefore, the conversion of excess ammonia which leaves the SCR is mandatory, since ammonia is also an emission regulated gas. Oxidation of ammonia leads to the formation of NO as main product, which would consequently contribute negatively to the total conversion of NOₓ of the whole exhaust system. An ASC may thus be located downstream the SCR to mitigate the emission of additional NO. The ASC catalyst combines the key NH₃ oxidation function with an SCR function. Ammonia entering the ASC is partially oxidized to NO. The freshly oxidized NO and NH₃ inside the ASC, not yet oxidized, can consequently react to N₂ following the usual SCR reaction schemes. In doing so, the ASC is capable of eliminating the traces of ammonia by converting them in a parallel mechanism to N₂.
In one embodiment of the present invention, the exhaust purification system comprises an ASC catalyst, wherein the ASC catalytically active material comprises a crystalline aluminosilicate zeolite according to the present invention and at least one platinum group metal selected from platinum, palladium and mixtures thereof.
Platinum group metals are used as oxidation catalysts in an ASC, and zeolites may be used for the SCR function. The precious metal is a platinum group metal selected from ruthenium, rhodium, palladium, osmium, iridium, platinum and mixtures thereof. Preferably, the precious metal is chosen from palladium, platinum, rhodium and mixtures thereof, more preferably, the precious metal is platinum. In a preferred embodiment, the platinum group metal is added in the form of a precursor salt to a washcoat slurry and applied to the carrier monolith. The platinum group metal is present in a concentration of 0.01 to 10 wt.-%, preferably 0.05 to 5 wt.-%, even more preferably 0.1 to 3 wt.-%, calculated as the respective platinum group metal and based on the total weight of the washcoat loading. In a preferred embodiment, the platinum group metal is platinum, and it is present in a concentration of 0.1 to 1 wt.-%, calculated as Pt and based on the total weight of washcoat loading.

### Brief description of the Drawings

Fig. 1a shows the XRD diffractogram of Example 1.
Fig. 1b shows the SEM images of Example 1.
Fig. 2a shows the XRD diffractogram of Example 2.
Fig. 2b shows the SEM images of Example 2.
Fig. 3a shows the XRD diffractogram of Example 3.
Fig. 3b shows the SEM images of Example 3.
Fig. 4 shows the XRD diffractogram of Example 4.
Fig. 5a shows the XRD diffractogram of Example 5.
Fig. 5b shows the SEM images of Example 5.
Fig. 6a shows the XRD diffractogram of Example 6.
Fig. 6b shows the SEM images of Example 6.
Fig. 7a shows the XRD diffractogram of Example 7.
Fig. 7b shows the SEM images of Example 7.
Fig. 8 shows the XRD diffractogram of Example 8.
Fig. 9a shows the XRD diffractogram of Example 9.
Fig. 9b shows the SEM images of Example 9.
Fig. 10 shows the XRD diffractogram of Example 10.
Fig. 11 shows the XRD diffractogram of Example 11.
Fig. 12a shows the XRD diffractogram of Example 12.
Fig. 12b shows the SEM images of Example 12.
Fig. 13 shows the XRD diffractogram of Example 13
Fig. 14 shows the XRD diffractogram of Example 15.
Fig. 15 shows the plot of the activity in µmol NO / (g catalyst ^{∗} second) against the onset temperature of Examples 1 to 14. The dotted line represents the line of best fit. The examples that fall out of our observable temperature range are depicted by hollow circles (examples 2c and 14).
Fig. 16 shows the plot of the turnover frequency (mol NO / (mol Cu * s)) against the onset temperature of Examples 1 to 14. The dotted line represents the line of best fit.

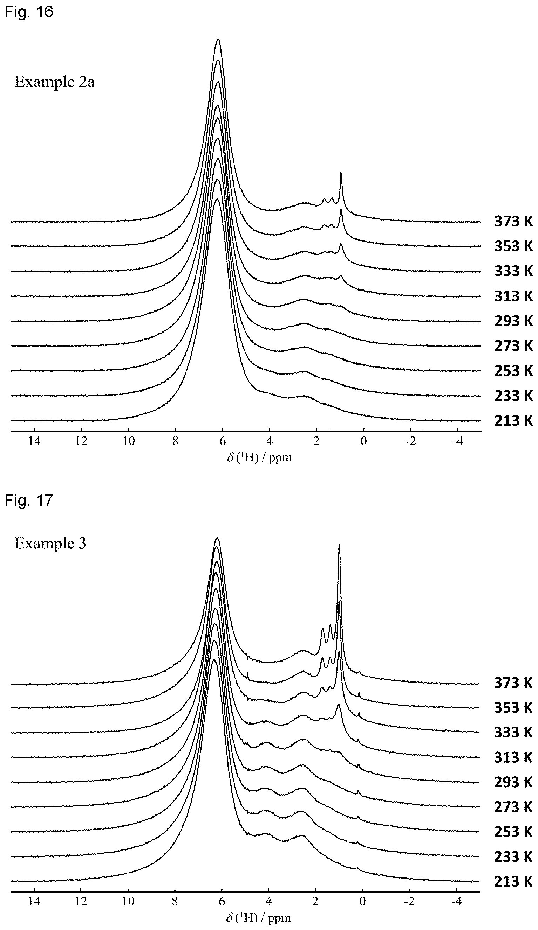

Fig. 16 shows the collection of ¹H NMR spectra recorded of example 2a at temperatures ranging from 213 to 373 K
Fig. 17 shows the collection of ¹H NMR spectra recorded of example 3 at temperatures ranging from 213 to 373 K

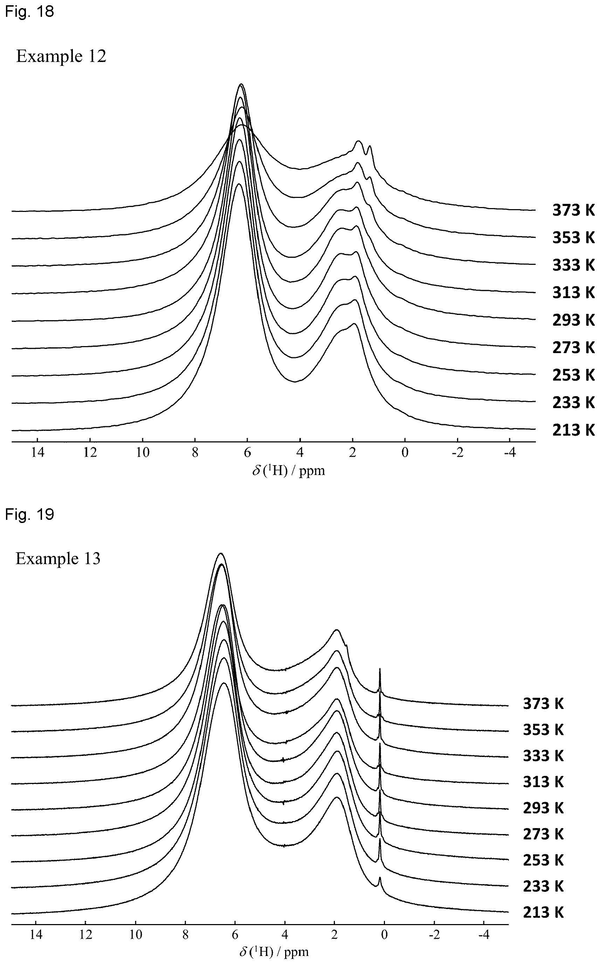

Fig. 18 shows the collection of ¹H NMR spectra recorded of example 12 at temperatures ranging from 213 to 373 K
Fig. 19 shows the collection of ¹H NMR spectra recorded of example 13 at temperatures ranging from 213 to 373 K

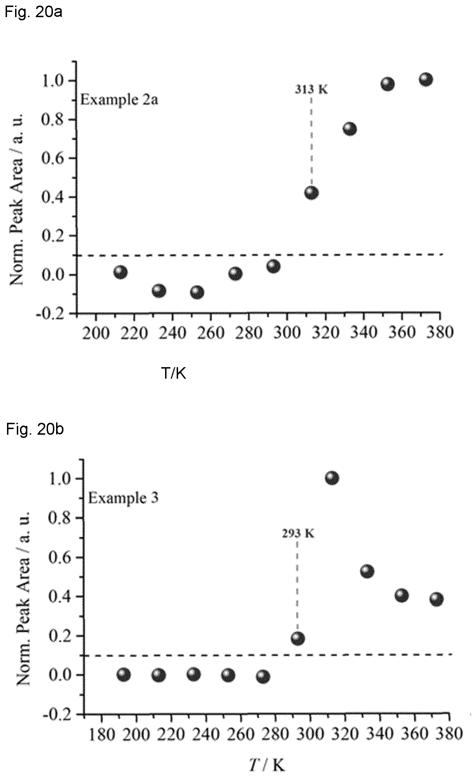

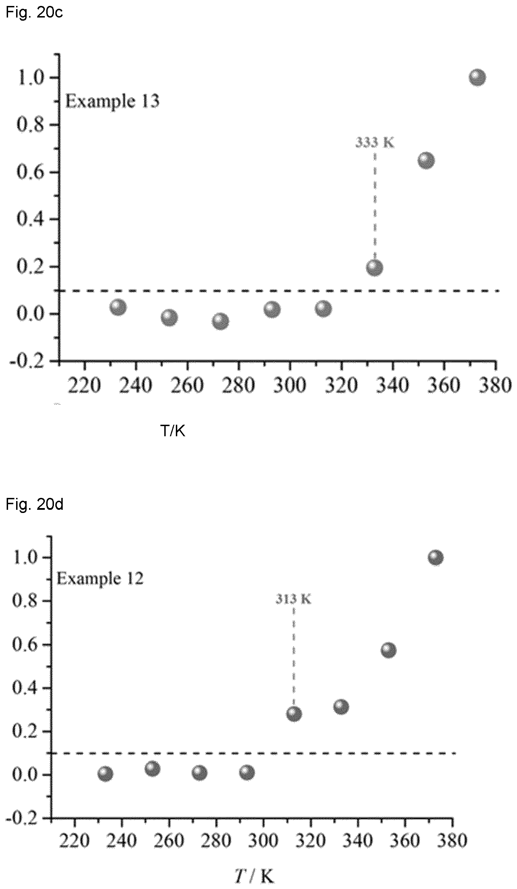

Fig. 20 shows the analysed data of the ¹H NMR spectra measured at temperatures ranging from 213 to 373 K for examples 2a (Fig. 20a), 3 (Fig. 20b), 12 (Fig. 20c) and 13 (Fig. 20d). The temperature from whereon the signals start to appear (increase of signal surface area above 10% of maximum observed increase in signal surface area) are indicated. The 10% threshold is indicated by a dashed line.

### Embodiments

### Example 1:

22.76 g tetraethylammonium hydroxide (TEAOH, 35 wt.%, Sigma-Aldrich) was added to a glass beaker. To this solution, 8.45 g Ludox AS-40 (Sigma-Aldrich) was added drop wise upon stirring. Afterwards 3.02 g hexamethonium bromide (R2-Br, Acros), 29.94 g of a 0.21 M potassium chloride solution (LabChem), 31.35 g of a 1.13 M sodium hydroxide solution (Fisher Scientific), 1.80 g CBV-500 (Zeolyst) and 2.77 g of a 1M Cu-TEPA solution was added slowly upon stirring. The final gel had the following molar ratios : SiO₂ / 0.043 Al₂O₃ / 0.46 NaOH / 0.08 KCI / 0.037 Cu-TEPA / 0.73 TEAOH / 0.11 R2-Br / 62 H₂O where R was the hexamethonium organic template. The resulting mixture was homogenized by vigorous stirring for 10 minutes and afterwards transferred to a stainless steel autoclave. This mixture was heated for 264 h at 160 °C under dynamic conditions. The solid product was recovered by filtration and washing, and was dried at 60 °C for 16 h.

The zeolite produced had a CHA framework type with a SAR of 17.8. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the exchange procedure with ammonium chloride described above was repeated an additional three times. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 20h at room temperature. The sample was recovered by filtration and dried at 60°C for 16h. This was repeated an additional two times. The final sample contained 3.21 wt.-% Cu, calculated as metallic Cu and based on the total weight of the zeolite.

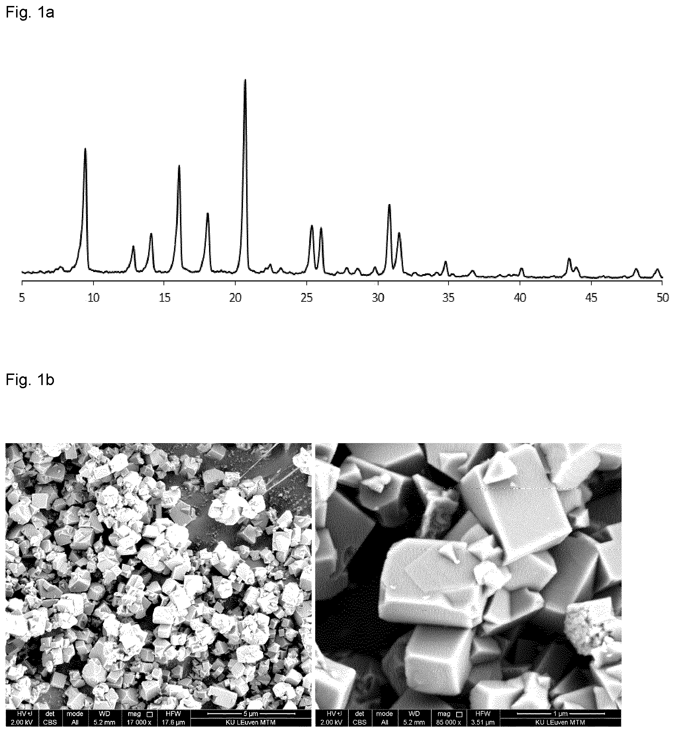

Fig. 1a shows the XRD diffractogram of Example 1, and Fig. 1b shows the SEM images of Example 1.

### Example 2:

22.75 g tetraethylammonium hydroxide (TEAOH, 35 wt.%, Sigma-Aldrich) was added to a glass beaker. To this solution, 8.49 g Ludox AS-40 (Sigma-Aldrich) was added drop wise upon stirring. Afterwards 3.04 g hexamethonium bromide (R2-Br, Acros), 29.92 g of a 0.21 M potassium chloride solution (LabChem), 31.42 g of a 1.13 M sodium hydroxide solution (Fisher Scientific), 1.79 g CBV-500 (Zeolyst) and 2.75 g of a 1M Cu-TEPA solution was added slowly upon stirring. The final gel had the following molar ratios : SiO₂ / 0.043 Al₂O₃ / 0.47 NaOH / 0.09 KCI / 0.038 Cu-TEPA / 0.75 TEAOH / 0.12 R2-Br / 63 H₂O wherein R was the hexamethonium organic template. The resulting mixture was homogenized by vigorous stirring for 10 minutes and afterwards transferred to a stainless steel autoclave. This mixture was heated for 168 h at 160 °C under dynamic conditions. The solid product was recovered by filtration and washing, and was dried at 60 °C for 16 h.

The zeolite produced had a CHA framework type with a SAR of 18.2. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the exchange procedure with ammonium chloride described above was repeated an additional three times. Finally part of the sample was suspended in an aqueous solution of copper (II) acetate (Sigma-Aldrich) (0.01885g of copper (II) acetate in 200ml of ultrapure water) (100 ml of solution / 1g of sample) and pumped through a closed system using a peristaltic pump for 20 hours. Another part of the sample was suspended in an similar aqueous solution of copper (II) acetate (Sigma-Aldrich) (0.01885g of copper (II) acetate in 200ml of ultrapure water) (100 ml of solution / 1g of sample) and stirred for 20h at room temperature. The sample was recovered by filtration and dried at 60°C for 16h. On part of the sample this procedure was repeated an additional two times. The final samples contained 1.89 (Ex. 2c) and 2.21 (Ex. 2b) and 3.24 (Ex. 2a) wt.-% Cu respectively, calculated as metallic Cu and based on the total weight of the zeolite.

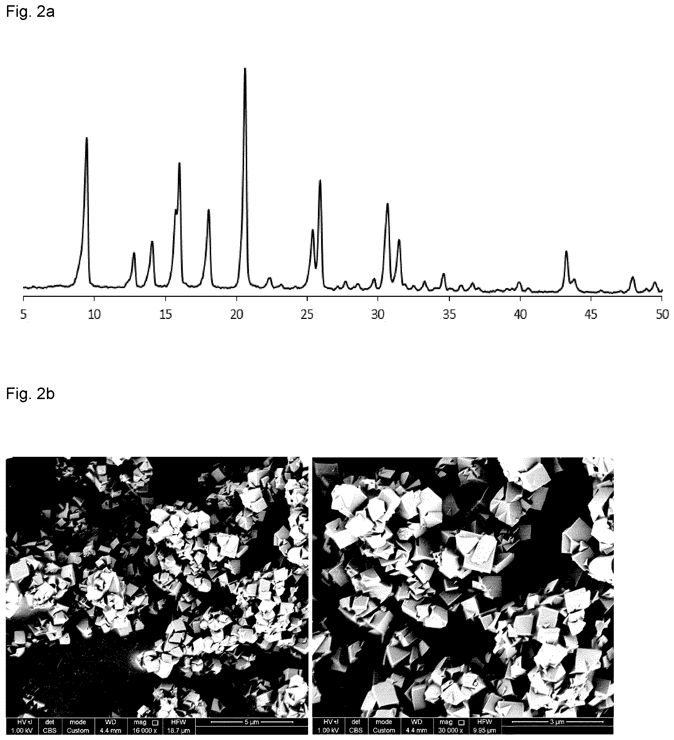

Fig. 2a shows the XRD diffractogram of Example 2, and Fig. 2b shows the SEM images of Example 2.

### Example 3:

22.75 g tetraethylammonium hydroxide (TEAOH, 35 wt.%, Sigma-Aldrich) was added to a glass beaker. To this solution, 8.58 g Ludox AS-40 (Sigma-Aldrich) was added drop wise upon stirring. Afterwards 29.90 g of a 0.21 M potassium chloride solution (LabChem), 31.52 g of a 1.13 M sodium hydroxide solution (Fisher Scientific), 1.78 g CBV-500 (Zeolyst) and 2.77 g of a 1M Cu-TEPA solution was added slowly upon stirring. The final gel had the following molar ratios : SiO₂ / 0.042 Al₂O₃ / 0.47 NaOH / 0.08 KCI / 0.038 Cu-TEPA / 0.74 TEAOH / 63 H₂O. The resulting mixture was homogenized by vigorous stirring for 10 minutes and afterwards transferred to a stainless steel autoclave. This mixture was heated for 168 h at 160 °C under dynamic conditions. The solid product was recovered by filtration and washing, and was dried at 60 °C for 16 h.

The zeolite produced had a CHA framework type with a SAR of 13.6. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the exchange procedure with ammonium chloride described above was repeated an additional three times. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated an additional two times. The final sample contained 3.15 wt.-% Cu, calculated as metallic Cu and based on the total weight of the zeolite.

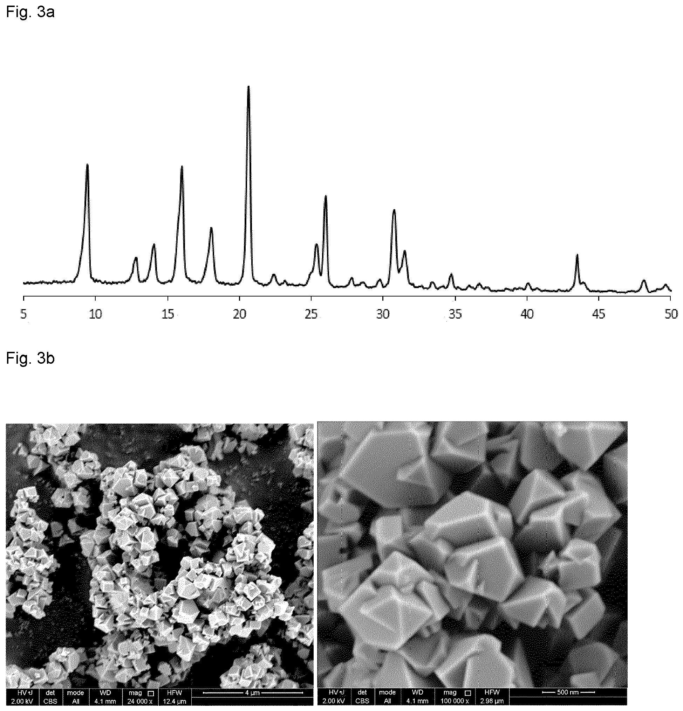

Fig. 3a shows the XRD diffractogram of Example 3, and Fig. 3b shows the SEM images of Example 3.

### Example 4:

2.99 g CBV720 (Zeolyst) was added to 26.74 g of a 1.20 M sodium hydroxide solution (Fischer Scientific) in a glass beaker. To this solution, 1.68 g of a 1 M Cu-TEPA solution was added upon stirring. The final gel had the following molar ratios : SiO₂ / 0.034 Al₂O₃ / 0.93 NaOH / 0.049 Cu-TEPA / 45 H₂O. The resulting mixture was homogenized by stirring for 30 minutes and afterwards transferred to a polypropylene. The resulting mixture was homogenized by vigorous stirring for 30 minutes and afterwards transferred to a polypropylene container. This mixture was heated for 168 h at 95 °C under static conditions. The solid product was recovered by filtration and washing, and was dried at 60 °C for 16 h.

The zeolite produced had a CHA framework type with a SAR of 9.2. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated an additional two times. The sample was then calcined under air flow at 550°C for 16h (heating rate: 1°C/min). After calcination, the sample was suspended in a 0.009 M ammonium chloride solution (MP Biomedicals LLC) (100ml solution / 1g of sample) and mixed for 24 hours at room temperature. The material was recovered by filtration and dried at 60°C for 16h. The final sample contained 4.1 wt.-% Cu, calculated as metallic Cu and based on the total weight of the zeolite.

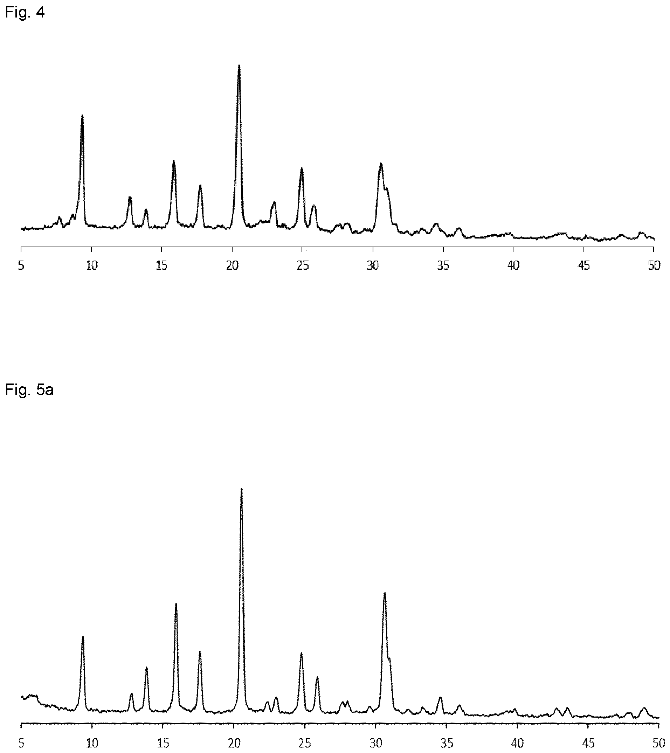

Fig. 4 shows the XRD diffractogram of Example 4.

### Example 5:

29.02 g of a 1.4M NaOH solution (Fisher Scientific) was added to a glass beaker. To this solution, 3.04 g CBV-720 (Zeolyst) was added upon stirring. Afterwards 1.72 g of a 1M Cu-TEPA solution and 0.1 g Zn(NO₃)₂.6H₂O (Sigma-Aldrich) was added slowly upon stirring. The final gel had the following molar ratios : SiO₂ / 0.034 Al₂O₃ / 1.17 NaOH / 0.049 Cu-TEPA / 0.0096 Zn / 47 H₂O. The resulting mixture was homogenized by vigorous stirring for 30 minutes and afterwards transferred to a polypropylene container. This mixture was heated for 168 h at 110 °C under static conditions. The solid product was recovered by filtration and washing, and was dried at 60 °C for 16 h.

The zeolite produced had a CHA framework type with a SAR of 8.4. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the exchange procedure with ammonium chloride described above was repeated an additional three times. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This procedure was repeated a second time. The final sample contained 3.13 wt.-% Cu, calculated as metallic Cu and based on the total weight of the zeolite.

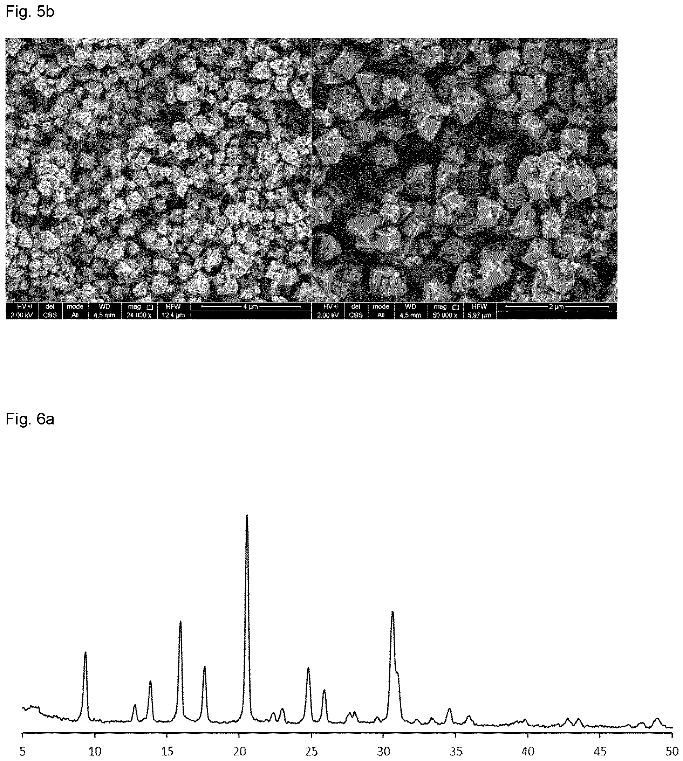

Fig. 5a shows the XRD diffractogram of Example 5, and Fig. 5b shows the SEM images of Example 5.

### Example 6:

22.76 g tetraethylammonium hydroxide (TEAOH, 35 wt.%, Sigma-Aldrich) was added to a glass beaker. To this solution, 8.51 g Ludox AS-40 (Sigma-Aldrich) was added drop wise upon stirring. Afterwards 3.02 g hexamethonium bromide (R2-Br, Acros), 30.05 g of a 0.21 M potassium chloride solution (LabChem), 31.39 g of a 1.13 M sodium hydroxide solution (Fisher Scientific), 1.78 g CBV-500 (Zeolyst) and 2.76 g of a 1M Cu-TEPA solution was added slowly upon stirring. The final gel had the following molar ratios : SiO₂ / 0.043 Al₂O₃ / 0.47 NaOH / 0.09 KCI / 0.038 Cu-TEPA / 0.75 TEAOH / 0.12 R2-Br / 63 H₂O where R is the hexamethonium organic template. The resulting mixture was homogenized by vigorous stirring for 10 minutes and afterwards transferred to a stainless steel autoclave. This mixture was left statically at room temperature for 20 hours and was then heated for 264 h at 160 °C under dynamic conditions. The solid product was recovered by filtration and washing, and was dried at 60 °C for 16 h.

The zeolite produced had a CHA framework type with a SAR of 14.0. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the exchange procedure with ammonium chloride described above was repeated an additional three times. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated an additional two times. The final sample contained 4.81 wt.-% Cu, calculated as metallic Cu and based on the total weight of the zeolite.

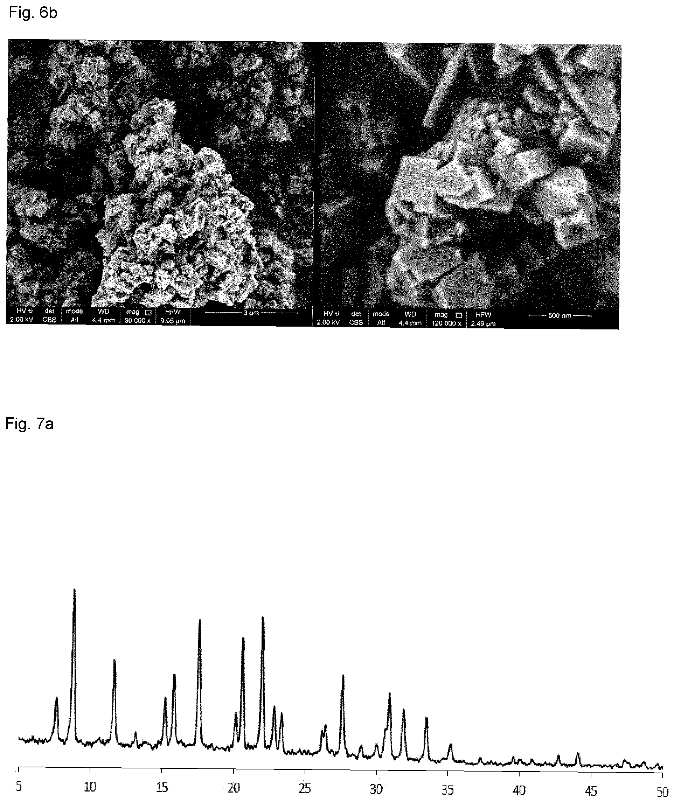

Fig. 6a shows the XRD diffractogram of Example 6, and Fig. 6b shows the SEM images of Example 6.

### Example 7:

1.59 g NaOH (Fisher Scientific) was added to 58.47 g of ultrapure water in a glass beaker. To this solution 25.01 g Na-silicate (Na₂O: 7.5 - 8.5%; SiO₂ : 25.5 - 28.5%; Merck) was added drop wise upon stirring. Afterwards 2.5 g CBV-100 (Zeolyst) and 6.11 g DABCO-C4-diquat dibromo (C₆H₁₂N)N⁺(C₄H₈)N⁺(C₆H₁₂N)(Br⁻)₂ was added slowly upon stirring. The final gel had the following molar ratios : SiO₂ / 0.007 Al₂O₃ / 0.74 NaOH / 0.099 R-Br₂ / 30 H₂O where R was the DABCO-C4-diquat organic template. The resulting mixture was homogenized by vigorous stirring for 10 minutes and afterwards transferred to a stainless steel autoclave. This mixture was heated for 120 h at 150 °C under dynamic conditions. The solid product was recovered by filtration and washing, and was dried at 60 °C for 16 h.

The zeolite produced has a AFX framework type with a SAR of 9. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the sample was suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated a second time. The final sample contained 4.08 wt.-% Cu, calculated as metallic Cu and based on the total weight of the zeolite.

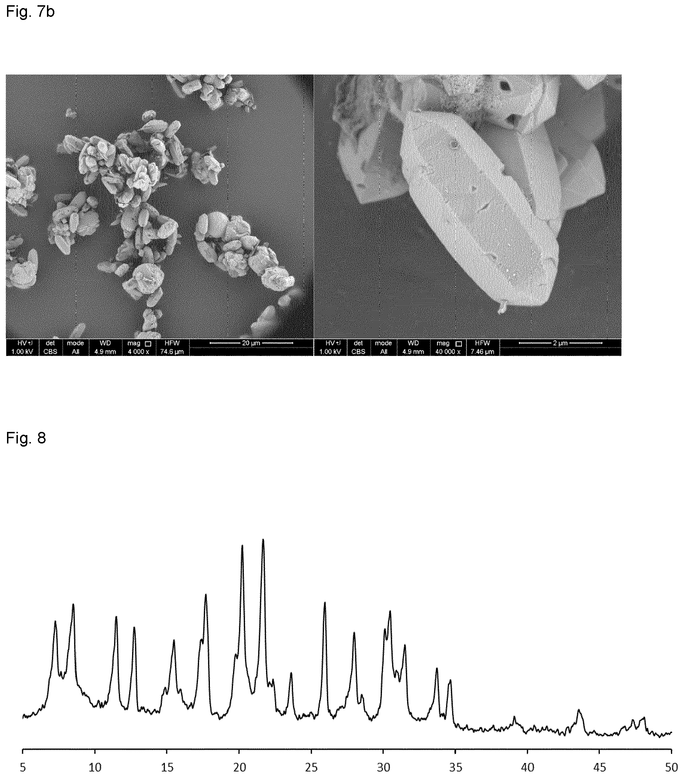

Fig. 7a shows the XRD diffractogram of Example 7, and Fig. 7b shows the SEM images of Example 7.

### Example 8:

1.10 g Aluminium nitrate (Al(NO₃)₃.9H₂O, Chem-Lab) was added to 9.52 g of ultrapure water in a glass beaker. To this solution 17.99 g of a 4.6M NaOH solution (Fisher Scientific) was added drop wise upon stirring. Afterwards 3.6 g of ABCO-C4-diquat dibromo ((C₇H₁₃)N⁺(C₄H₈)N⁺(C₇H₁₃)(Br⁻)₂) was dissolved in 23.70 g ultrapure water and added to the previous solution dropwise upon stirring. Finally 16.50 g of Ludox AS-30 (Sigma Aldrich) was added dropwise upon stirring. The final gel had the following molar ratios : SiO₂ / 0.018 Al₂O₃ / 1.01 NaOH / 0.100 R-Br₂ / 40 H₂O where R was the ABCO-C4-diquat organic template. The resulting mixture was homogenized by vigorous stirring for 10 minutes and afterwards transferred to a stainless steel autoclave. This mixture was heated for 168 h at 150 °C under dynamic conditions. The solid product was recovered by filtration and washing, and was dried at 60 °C for 16 h.

The zeolite produced had an AFX framework type with a SAR of 10.6. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the sample was suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated a second time. The final sample contained 5.24 wt.-% Cu, calculated as metallic Cu and based on the total weight of the zeolite.

Fig. 8 shows the XRD diffractogram of Example 8.

### Example 9:

19.48 g N,N-dimethyl-3,5-dimethylpiperidinium (C₅H₈N⁺(CH₃)₄I⁻) and 2.21 g NaOH (Fisher Scientific) was added to 44.38 g of ultrapure water in a glass beaker. To this solution 27.51 g Na-silicate (Na₂O: 7.5 - 8.5%; SiO₂ : 25.5 - 28.5%; Merck) was added drop wise upon stirring. Afterwards 2.19 g CBV-500 (Zeolyst) was added slowly upon stirring. The final gel had the following molar ratios : SiO₂ / 0.027 Al₂O₃ / 0.88 NaOH / 0.51 R-Br₂ / 24 H₂O where R was the DABCO-C4-diquat organic template. The resulting mixture was homogenized by vigorous stirring for 10 minutes and afterwards transferred to a stainless steel autoclave. This mixture was heated for 168 h at 135 °C under static conditions. The solid product was recovered by filtration and washing, and was dried at 60 °C for 16 h.

The zeolite produced had an AEI framework type with a SAR of 12.4. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the sample was suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated an additional two times. The final sample contained 3.00 wt.-% Cu, calculated as metallic Cu and based on the total weight of the zeolite.

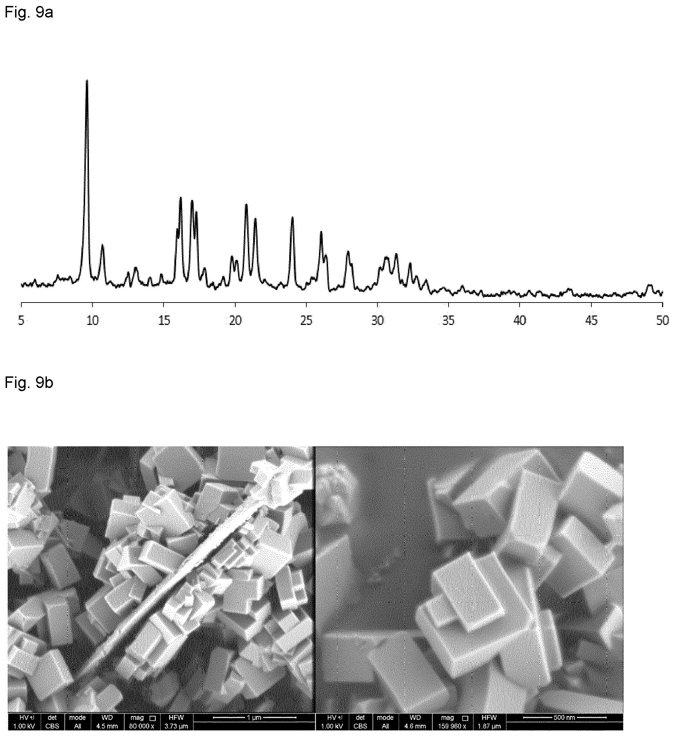

Fig. 9a shows the XRD diffractogram of Example 9, and Fig. 9b shows the SEM images of Example 9.

### Example 10:

1.74 g potassium hydroxide (Fisher Scientific) was added to 2.9 g of ultrapure water in a glass beaker. To this solution 0.92 g aluminium hydroxide (Al(OH)₃; BDH Chemicals) was added upon stirring and dissolved by heating to 60°C. Any water lost due to evaporation was compensated at the end of dissolution. In a separate beaker 0.12 g of Sr(NO₃)₂ (Acros) was added to 4.4 g of ultrapure water. 9.7 g Ludox HS-40 (Sigma-Aldrich) was added dropwise upon stirring. The two solutions were added together dropwise upon stirring. Finally 3 g of ultrapure water was added. The mixture was stirred for 60 h at room temperature.

12.91 g of TEAOH (TEAOH, 35 wt%; Sigma-Aldrich) was added to 0.91 g of Al-sec-butoxide (Fluka) in sealable polypropylene container. 4.5 g of Ludox AS-40 (Sigma-Aldrich and 0.2 g of ultrapure water was added dropwise upon stirring. The mixture was stirred for 1 h and then heated to 95 °C for 18 h in static conditions. 0.22 g of TMACI (Sigma-Aldrich) was added to 0.6 g of ultrapure water and added dropwise to the gel. Finally this mixture was stirred for 60 h at room temperature.

The two mixtures were homogenized by vigorous stirring for 10 minutes and afterwards transferred to a stainless steel autoclave. The final gel had the following molar ratios : SiO₂ / 0.082 Al₂O₃ / 0.33 KOH / 0.32 TEAOH / 0.0060 Sr / 0.021 TMA / 16 H₂O. This mixture was heated for 168 h at 180 °C under static conditions. The solid product was recovered by filtration and washing, and was dried at 60 °C for 16 h.

The zeolite produced had an ERI/OFF framework type with a SAR of 5.2. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the sample was suspended in a 0.5M ammonium chloride solution (MP Biomedicals LLC) (100ml solution / 1g of sample) and mixed for 4 hours under reflux conditions. The material was recovered by filtration and dried at 60°C for 16h. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. The final sample contained 2.88 wt.-% Cu, calculated as metallic Cu and based on the total weight of the zeolite.

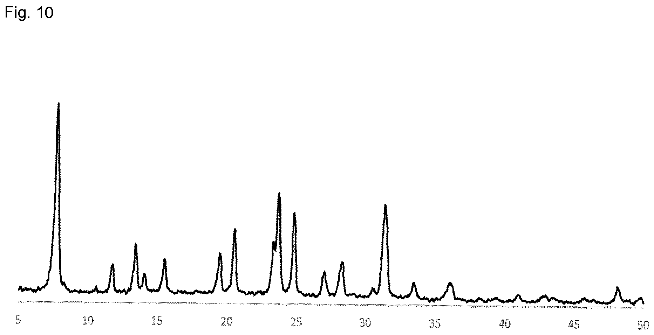

Fig. 10 shows the XRD diffractogram of Example 10.

### Example 11:

880.47 g tetraethylammonium hydroxide (TEAOH, 35 wt.%, Sigma-Aldrich) was added to a glass beaker. To this solution 19.86 g aluminum sec-butoxide was added, and then 386.75 g Ludox AS-40 (Sigma-Aldrich) was added dropwise upon stirring. Afterwards 116.89 g hexamethonium bromide (R2-Br, Acros) and 17.71 g KCI (LabChem) were added. This first gel was stirred at room temperature for 48 hours.

A second gel was prepared by addition of 212.45 g CBV-720 (Zeolyst) to a solution containing 114.87 g of a 1 M Cu-TEPA solution, and 1148 g of a 2.0 M NaOH solution. This gel was aged statically for 48 hours at 95°C.

Next, the 2 gels were mixed and crystallized at 150°C for 3 days under stirring. The final gel had the following molar ratios : SiO₂ / 0.025 Al₂O₃ / 0.46 NaOH / 0.05 KCI / 0.023 Cu-TEPA / 0.42 TEAOH / 0.06 R2-Br / 22 H₂O where R was the hexamethonium organic template. The solid product was recovered by filtration and washing, and was dried at 60 °C for 16 h. The zeolite produced had an ERI/CHA framework type with a SAR of 11.5. The sample was then calcined under air flow at 750°C for 8h (heating rate: 5°C/min). The final sample contained 2.70 wt.-% Cu, calculated as metallic Cu and based on the total weight of the zeolite.

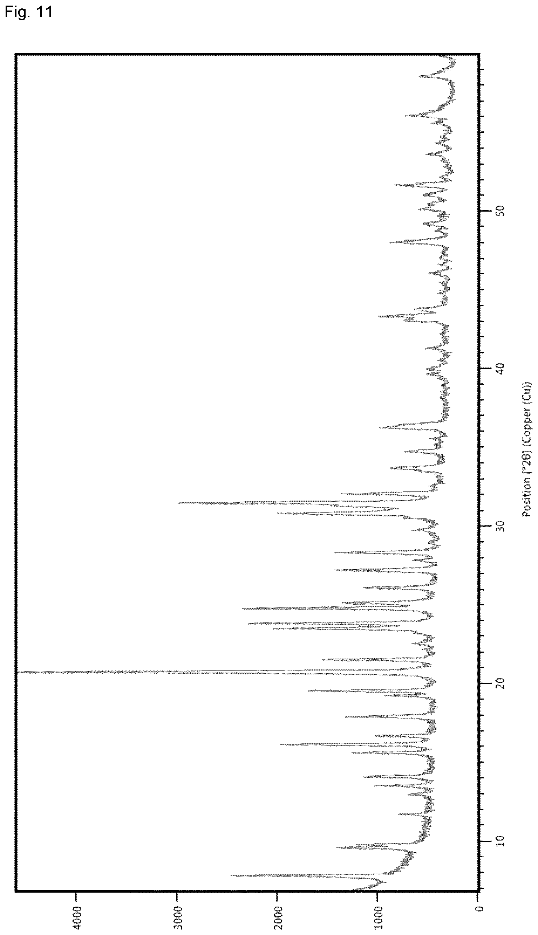

Fig. 11 shows the XRD diffractogram of Example 11.

### Example 12:

1284.42 g tetraethylammonium hydroxide (TEAOH, 35 wt.%, Sigma-Aldrich) was added to a glass beaker. To this solution 28.90 g aluminum sec-butoxide was added, and then 564.20 g Ludox AS-40 (Sigma-Aldrich) was added dropwise upon stirring. Afterwards 170.53 g hexamethonium bromide (R2-Br, Acros) and 25.90 g KCI (LabChem) were added. This first gel was stirred at room temperature for 48 hours.

A second gel was prepared by addition of 310.04 g CBV-720 (Zeolyst) to a solution containing 173.33 g of a 1 M Cu-TEPA solution, and 1791.32 g of a 2.0 M NaOH solution. This gel was aged statically for 48 hours at 95°C.

Next, the 2 gels were mixed and crystallized at 150°C for 3 days under stirring. The final gel has the following molar ratios : SiO₂ / 0.025 Al₂O₃ / 0.49 NaOH / 0.05 KCI / 0.024 Cu-TEPA / 0.42 TEAOH / 0.06 R2-Br / 23 H₂O where R was the hexamethonium organic template. The solid product was recovered by filtration and washing, and was dried at 60 °C for 16 h. The zeolite produced had an ERI/CHA framework type with a SAR of 11.8. The sample was then calcined under air flow at 750°C for 8h (heating rate: 5°C/min). The final sample contained 3.9 wt.-% Cu, calculated as metallic Cu and based on the total weight of the zeolite.

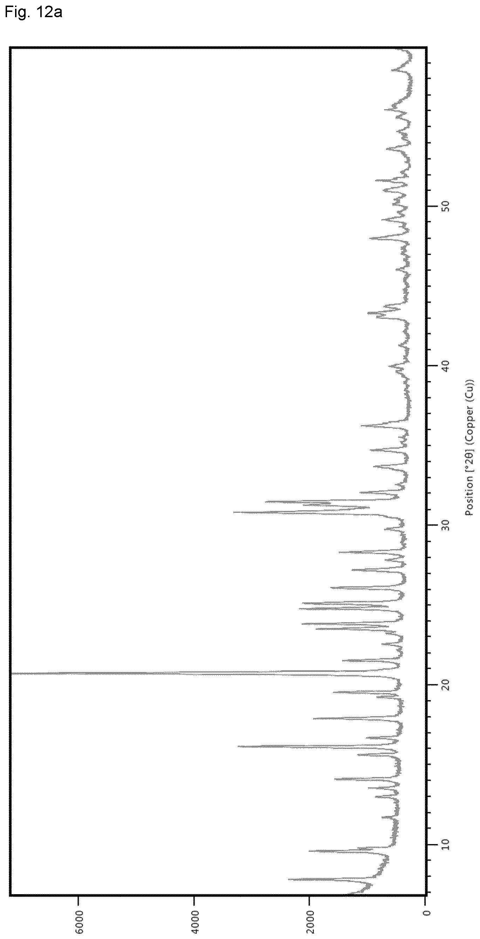

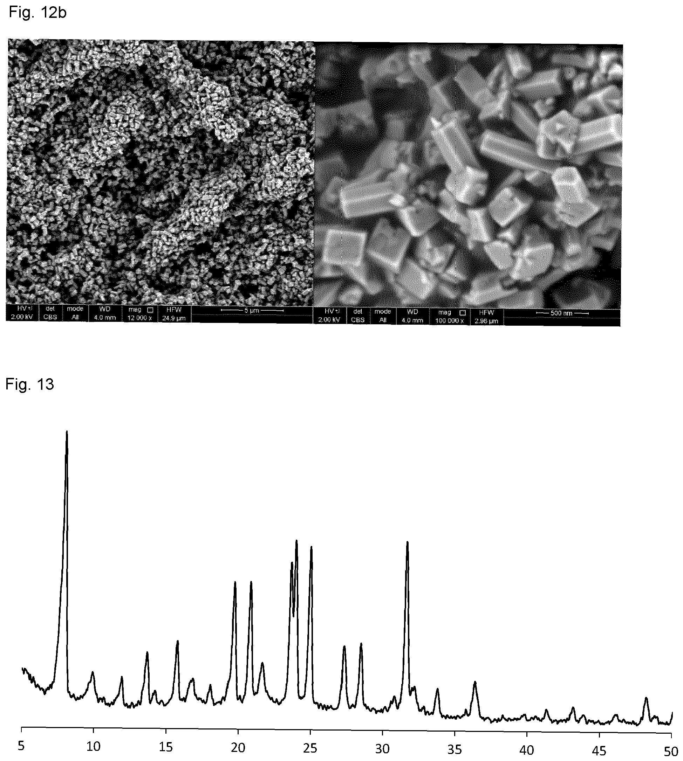

Fig. 12a shows the XRD diffractogram of Example 12, and Fig. 12b shows the SEM images of Example 12.

### Example 13:

49.72 g tetraethylammonium hydroxide (TEAOH, 35 wt.%, Sigma-Aldrich) was added to a glass beaker. To this solution, 1.20 g aluminium sec-butoxide (Fluka) was added upon stirring until dissolved. Afterwards 21.84 g Ludox AS-40 (Sigma-Aldrich) was added dropwise upon stirring. Then 6.58 g hexamethonium bromide (R2-Br, Acros) was added upon stirring until dissolved. Finally 21.11 g of a 0.68 M potassium chloride solution (Chem-Lab) was added slowly upon stirring. The final gel had the following molar ratios : SiO₂ / 0.017 Al₂O₃ / 0.09 KCI / 0.82 TEAOH / 0.125 R2-Br / 25 H₂O where R was the hexamethonium organic template. The resulting mixture was homogenized by vigorous stirring for 24 hours and afterwards transferred to a stainless steel autoclave. This mixture was left at room temperature for 24h and then heated for 14 days at 100 °C under dynamic conditions. The solid product was recovered by filtration and washing, and was dried at 60 °C for 16 h.

The zeolite produced had an ERI framework type with a SAR of 15.8. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the sample was suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated a second time. The final sample contained 2.7 wt.-% Cu, calculated as metallic Cu and based on the total weight of the zeolite.

Fig. 13 shows the XRD diffractogram of Example 13.

### Example 14:

22.46 g tetraethylammonium hydroxide (TEAOH, 35 wt.%, Sigma-Aldrich) was added to a glass beaker. To this solution, 10.57 g Ludox AS-40 (Sigma-Aldrich) was added drop wise upon stirring. Afterwards 2.98 g hexamethonium bromide (R2-Br, Acros), 27.79 g of a 0.21 M potassium chloride solution (LabChem), 31.61 g of a 1.13 M sodium hydroxide solution (Fisher Scientific), 1.75 g CBV-500 (Zeolyst) and 2.71 g of a 1M Cu-TEPA solution was added slowly upon stirring. The final gel has the following molar ratios : SiO₂ / 0.035 Al₂O₃ / 0.48 NaOH / 0.07 KCl / 0.032 Cu-TEPA / 0.62 TEAOH / 0.10 R2-Br / 52 H₂O where R was the hexamethonium organic template. The resulting mixture was homogenized by vigorous stirring for 10 minutes and afterwards transferred to a stainless steel autoclave. This mixture was heated for 168 h at 160 °C under dynamic conditions. The solid product was recovered by filtration and washing, and was dried at 60 °C for 16 h.

The zeolite produced had a CHA framework type with a SAR of 17.8. The sample was then suspended in a 0.5M ammonium chloride solution (MP Biomedicals LLC) (100ml solution / 1g of sample) and mixed for 4 hours under reflux conditions. The material was recovered by filtration and dried at 60°C for 16h. This exchange procedure was repeated a second time. The sample was then calcined under nitrogen flow at 550°C for 5h (heating rate: 5°C/min). Upon cooling down to 200°C, the gas flow was switched to oxygen and the sample was heated again to 550°C for 16h (heating rate: 5°C/min). After calcination the exchange procedure with ammonium chloride described above was repeated an additional three times. Finally the sample was suspended in an aqueous solution of copper (II) acetate (Sigma-Aldrich) (0.01885g of copper (II) acetate in 200ml of ultrapure water) (100 ml of solution / 1g of sample) and stirred for 24h at room temperature. The sample was recovered by filtration and dried at 60°C for 16h. This was repeated an additional two times. The final sample contained 3.21 wt.-% Cu, calculated as metallic Cu and based on the total weight of the zeolite.

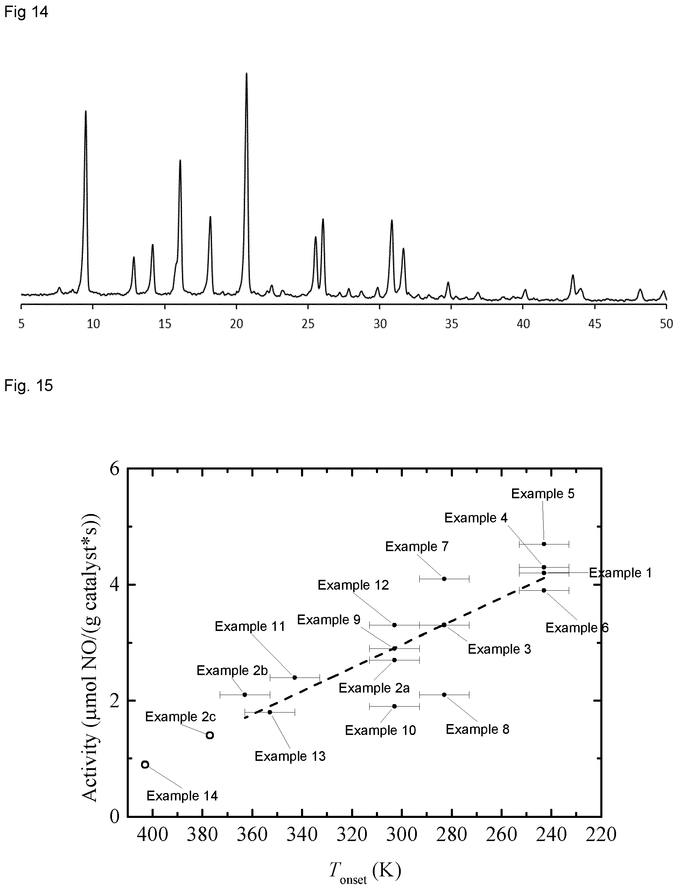

Fig. 14 shows the XRD diffractogram of Example 14.

### NMR measurements:

The as-made zeolite was packed in a 4 mm zirconia solid state NMR rotor and dried under vacuum (1 mbar) at 90 °C for 30 min and at 200 °C for 16h. After flushing with N₂ gas, the rotor was sealed. ¹H MAS NMR experiments were performed on a Bruker Ultrashield Plus 500 MHz spectrometer (static magnetic field of 11.7 T) equipped with a 4 mm H/X/Y magic angle spinning (MAS) solid-state probe as described above. Furthermore, the onset temperature of the motional narrowing behaviour was also determined as described above.

### SEM measurements:

Scanning electron microscopy (SEM) images were taken on a Nova NanoSEM 450 (FEI). The powder samples were dispersed on carbon tape and measured without coating using an electron beam at 1 or 2 kV.

### Micropore volume determination:

Nitrogen adsorption/desorption isotherms of the samples were recorded at - 196°C using a Micromeritics Tristar apparatus. The microporous volume (mV) was calculated using the t-plot method.

Table 1 lists the framework types, the SAR, the copper contents, the Cu/AI ratios and the micropore volumes of the small-pore zeolites described above.

### Determination of hydrothermal stability

The hydrothermal stability was determined by heating Cu loaded zeolite catalyst pellets to 900 °C in a quartz tube under airflow (2 mL/min) with an absolute humidity of 12 vol.% for 3 h with a heating rate of 5 °C/min. Cooling was performed under a 40 mL/min dry nitrogen flow. Prior to this experiment, the powder was pelletized to a particle size between 125 and 250 µm to avoid pressure build-up in the quartz tube.

The hydrothermal stability was determined by checking the XRD diffractogram after the procedure described above.

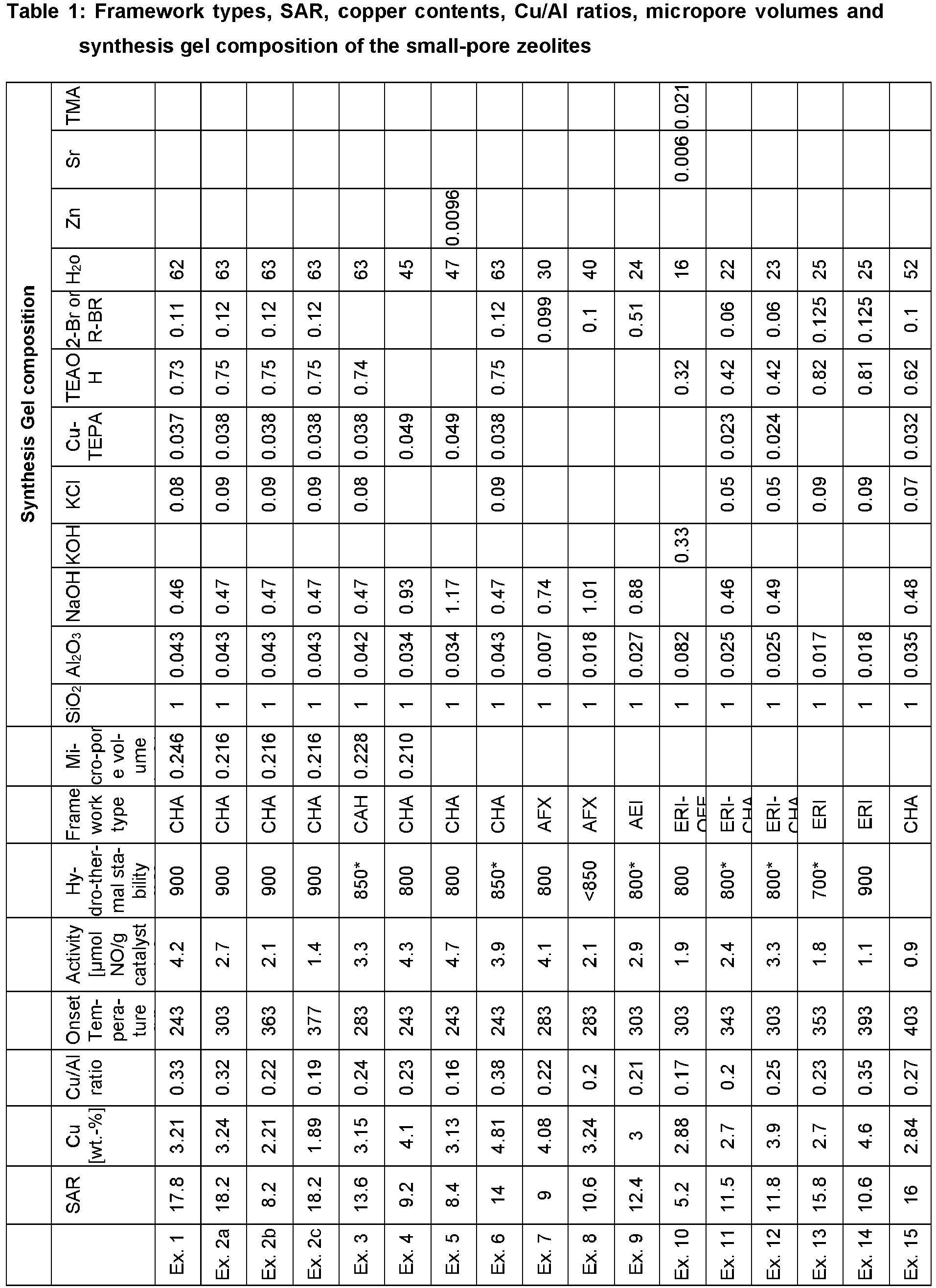

The temperatures given under "hydrothermal stability" in Table 1 mean that the respective zeolite is at least stable up to the temperature indicated.

Temperatures for the hydrothermal stability having an asterisk mean that the respective samples showed signs of degradation after hydrothermal aging at a temperature 50°C higher then the temperature noted in Table 1.

The copper content was calculated as copper metal (Cu) and based on the total weight of the respective zeolite.

### Measurement of the activity and the turnover rates of the embodiments

A fixed bed consisting of 20 mg catalyst pellets with a size between 125 and 250 µm was diluted with 80 mg broken quartz particles of similar size range, corresponding to a total volume of ca. 0.044 cm³, was loaded in a quartz tube with internal diameter of 4 mm. Testing occurred at a constant temperature of 175 °C, maintained for 1 hours. Prior to the 175 °C test, a pretreatment at 450 °C for 2 h was performed. Heating rates were fixed at 5 °C/min. The gas composition was: 1000 ppm NO, 900 ppm NH₃, 5 vol% O₂, 2 vol% CO₂ and 2.2% H₂O. N₂ served as balancing gas. The gas hourly space velocity was 340,000 h⁻¹.

The activities and turnover frequency of the embodiments are shown in Table 2.

**Table 2: Onset Temperatures, activities and turnover rates of the embodiments 1 to 15**

| Example | Framework | Tₒₙₛₑₜ (K) | Activity (µmol NO / g catalyst * s)) | TOF (mol NO / (mol Cu * s)) |
|---|---|---|---|---|
| 1 | CHA | 243 | 4.2 | 8.31*10⁻³ |
| 2a | CHA | 303 | 2.7 | 5.30*10⁻³ |
| 2b | CHA | 363 | 2.1 | 6.04*10⁻³ |
| 2c | CHA | 377* | 1.4 | 4.68*10⁻³ |
| 3 | CHA | 283 | 3.3 | 6.66*10⁻³ |
| 4 | CHA | 243 | 4.3 | 6.67*10⁻³ |
| 5 | CHA | 243 | 4.7 | 9.54*10⁻³ |
| 6 | CHA | 243 | 3.9 | 5.15*10⁻³ |
| 7 | AFX | 283 | 4.1 | 6.36*10⁻³ |
| 8 | AFX | 283 | 2.1 | 4.12*10⁻³ |
| 9 | AEI | 303 | 2.9 | 6.14*10⁻³ |
| 10 | ERI/OFF | 303 | 1.9 | 4.29*10⁻³ |
| 11 | ERI/CHA | 343 | 2.4 | 5.61*10⁻³ |
| 12 | ERI/CHA | 303 | 3.3 | 5.83*10⁻³ |
| 13 | ERI | 353 | 1.8 | 4.24*10⁻³ |
| 14 | CHA | 403* | 0.9 | 2.08*10⁻³ |

The plot of the activity in µmol NO / (g catalyst ^{∗} second) against the onset temperature of Examples 1 to 14 is shown in Fig. 15. *onset temperatures of examples 2c and 14 are calculated values based on the fitted linear curve as described above. Hollow circles were used to indicate their calculated onset temperature.

The ¹H NMR spectra recorded at temperatures ranging from 173 to 373K of examples 2a, 3, 12 and 13 are shown in figures 16 - 19. An accurate visual determination of the onset temperature of the motional narrowing behaviour based solely on the ¹H NMR spectra is easier for some samples (e.g. examples 2a and 3) compared to others (e.g. examples 12 and 13). The above mentioned additional analysis method was performed on the ¹H NMR spectra of examples 2a, 3, 12 and 13 and shown in figure 20. Figure 20 demonstrates how this additional analysis method makes the onset temperature determination much clearer.

The onset temperature of the motional narrowing behaviour of the other examples were determined in similar fashion.

## Claims

1. Copper-loaded crystalline aluminosilicate zeolites having a maximum pore size of eight tetrahedral atoms, wherein the zeolites have an onset temperature at which motional narrowing is detected in the ¹H-NMR spectrum of between 10 and 373K.

2. Copper-loaded crystalline aluminosilicate zeolite according to claim 1, wherein the zeolite framework type material is chosen from ACO, AEI, AEN, AFN, AFT, AFX, ANA, APC, APD, ATT, CDO, CHA, DDR, DFT, EAB, EDI, EPI, ERI, ESV, ETL, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG, ZON and mixtures and intergrowths that contain at least one of these framework types.

3. Copper-loaded crystalline aluminosilicate zeolite according to claim 1 or 2, wherein the SAR ranges from 4 to 30.

4. Copper-loaded crystalline aluminosilicate zeolite according to any one of claims 1 to 3, wherein the zeolite comprises copper in a concentration of 0.1 to 10 wt.-%, calculated as copper (Cu) metal and based on the total weight of the zeolite.

5. Copper-loaded crystalline aluminosilicate zeolite according to any one of claims 1 to 4, wherein the copper is introduced into the zeolite during the synthesis of said zeolite by an organic structure-directing agent comprising copper.

6. Copper-loaded crystalline aluminosilicate zeolite according to any one of claims 1 to 5, wherein the copper to aluminum atomic ratio is in the range of between 0.003 to 0.5.

7. Copper-loaded crystalline aluminosilicate zeolite according to any one of claims 1 to 6, wherein the zeolite comprises at least one alkali and/or alkaline earth metal in a concentration of 0 to 2 wt.-%, calculated as the respective metals and based on the total weight of the zeolite.

8. Copper-loaded crystalline aluminosilicate zeolite according to claim 7, wherein the at least one alkali or alkaline earth metal is selected from sodium, potassium and mixtures thereof.

9. A process for the removal of NOₓ from automotive combustion exhaust gases wherein a zeolite according to any one of claims 1 to 8 is used as the SCR catalytically active material for the conversion of NOₓ.

10. A catalysed substrate monolith comprising an SCR catalytically active material for the conversion of NOₓ for use in treating automotive combustion exhaust gases, wherein said SCR catalytically active material for the conversion of NOₓ is a zeolite according to any one of claims 1 to 8.

11. A catalysed substrate monolith according to claim 10, wherein the zeolite according to any one of claims 1 to 9 is present in the form of a washcoat on a carrier substrate.

12. A catalysed substrate monolith according to claim 11, wherein the carrier substrate is a flow-through substrate or a wall-flow filter.

13. A catalysed substrate monolith according to claim 10, wherein the catalysed substrate monolith is an extruded catalysed substrate monolith.

14. A catalysed substrate monolith according to claim 10, wherein the catalysed substrate monolith is a corrugated catalysed substrate monolith.

15. An exhaust gas purification system comprising a particulate filter coated with an SCR catalyst, wherein the SCR catalytically active material is a crystalline aluminosilicate zeolite according to any one of claims 1 to 8.

16. An exhaust gas purification system comprising a PNA catalyst, wherein the PNA catalytically active material comprises a crystalline aluminosilicate zeolite according to any one of claims 1 to 8 and at least one platinum group metal selected from ruthenium, rhodium, palladium, osmium, iridium, platinum and mixtures thereof.

17. An exhaust gas purification system according to claim 16, wherein the platinum group metal is palladium, and the palladium is present in a concentration of 0.5 to 5 wt.-%, calculated as Pd and based on the total weight of the zeolite.

18. An exhaust gas purification system comprising an ASC catalyst, wherein the ASC catalytically active material comprises a crystalline aluminosilicate zeolite according to any one of claims 1 to 9 and at least one platinum group metal selected from ruthenium, rhodium, palladium, osmium, iridium, platinum and mixtures thereof.
